# EUROPÄISCHE PATENTSCHRIFT

(11) **EP 3 963 839 B1**
(45) Veröffentlichungstag und Bekanntmachung des Hinweises auf die Patenterteilung: **24.08.2022**
(21) Anmeldenummer: 20745187.3
(22) Anmeldetag: 23.07.2020
(51) Int. Cl.: H04L 12/40, H04L 12/403, H04L 12/413

(54) **NETZWERKVERTEILER, AUTOMATISIERUNGSNETZWERK UND VERFAHREN ZUR DATENÜBERTRAGUNG IN EINEM AUTOMATISIERUNGSNETZWERK**
NETWORK DISTRIBUTOR, AUTOMATION NETWORK AND METHOD FOR TRANSMITTING DATA IN AN AUTOMATION NETWORK
DISTRIBUTEUR DE RÉSEAU, RÉSEAU D'AUTOMATISATION ET PROCÉDÉ DE TRANSMISSION DE DONNÉES DANS UN RÉSEAU D'AUTOMATISATION

(30) Priorität: 14.08.2019 DE 102019121929
(43) Veröffentlichungstag der Anmeldung: 09.03.2022
(73) Patentinhaber: Beckhoff Automation GmbH, 33415 Verl (DE)
(72) Erfinder: BÜTTNER, Holger, 12205 Berlin (DE); JANSSEN, Dirk, 33415 Verl (DE); VONNAHME, Erik, 33154 Salzkotten (DE); RETTIG, Thomas, 33378 Rheda-Wiedenbrück (DE); BECKHOFF, Hans, 33415 Verl (DE); BUNTE, Thorsten, 33335 Gütersloh (DE); BECKHOFF, Johannes, 33758 Schloß Holte-Stukenbrock (DE)
(74) Vertreter: Patentanwaltskanzlei WILHELM & BECK
(86) Internationale Anmeldenummer: PCT/EP2020/070826
(87) Internationale Veröffentlichungsnummer: WO 2021/028186

(56) Entgegenhaltungen:
- JP-A- 2017 228 887
- JASPERNEITE J ET AL: "A Proposal for a Generic Real-Time Ethernet System", IEEE TRANSACTIONS ON INDUSTRIAL INFORMATICS, IEEE SERVICE CENTER, NEW YORK, NY, US, Bd. 5, Nr. 2, 1. Mai 2009 (2009-05-01), Seiten 75-85, XP011334256, ISSN: 1551-3203, DOI: 10.1109/TII.2009.2017259
- JAHANZAIB IMTIAZ ET AL: "A layer-2 multicast forwarding policy for a generic Real-time Ethernet system", FACTORY COMMUNICATION SYSTEMS (WFCS), 2010 8TH IEEE INTERNATIONAL WORKSHOP ON, IEEE, PISCATAWAY, NJ, USA, 18. Mai 2010 (2010-05-18), Seiten 53-60, XP031732752, ISBN: 978-1-4244-5460-0

## Beschreibung

Die Erfindung betrifft einen Netzwerkverteiler in einem Automatisierungsnetzwerk. Des Weiteren betrifft die Erfindung ein Automatisierungsnetzwerk sowie ein Verfahren zur Datenübertragung in dem Automatisierungsnetzwerk.

Automatisierungsnetzwerke werden häufig als "Feldbussysteme" betrieben. Dies sind industrielle Bussysteme, die eine echtzeitfähige Steuerung der Maschinen oder Anlagen des Automatisierungsnetzwerks ermöglichen, wobei die Maschinen oder Anlagen des Automatisierungsnetzwerks mithilfe von speicherprogrammierbaren Steuerungen (SPS) gesteuert werden. Zur Kommunikation der Feldgeräte, also beispielsweise Sensoren und Aktoren der Maschinen oder Anlagen des Automatisierungsnetzwerks, mit der SPS nutzt die SPS das Feldbussystem. Senden mehrere Netzwerkteilnehmer Telegramme über dieselbe Datenleitung in dem Automatisierungsnetzwerk, die als leitungsgebundenes oder drahtloses Bussystem ausgebildet sein kann, so muss es eine Möglichkeit geben, damit sich die Netzwerkteilnehmer dieselbe Datenleitung für die Datenübertragung teilen können. Zu diesem Zweck gibt es festgelegte Hierarchien und normierte Protokolle.

Meist arbeiten die Feldbussysteme im sogenannten "Master-Slave-Betrieb". Das heißt wenigstens ein Netzwerkteilnehmer ist als ein Masterteilnehmer ausgebildet und übernimmt die Steuerung der Prozesse, während die übrigen Netzwerkteilnehmer, die als Protokollteilnehmer ausgelegt sein können, als Slave-Protokollteilnehmer die Abarbeitung von Teilaufgaben im Steuerungsbetrieb des Automatisierungsnetzwerks übernehmen. Der Austausch von Daten erfolgt dabei im Automatisierungsnetzwerk mithilfe von Telegrammen, die vom Masterteilnehmer an die Slave-Protokollteilnehmer ausgegeben werden. Die Slave-Protokollteilnehmer lesen die an sie adressierten Ausgangsdaten aus dem Telegramm und legen ihre Eingangsdaten in das Telegramm und senden das Telegramm an den Masterteilnehmer zurück.

Häufig sind die Automatisierungsnetzwerke als Ethernet basierte Netzwerke ausgebildet, beziehungsweise als Ethernet basierter Feldbus. Das heißt, das dem Telegrammverkehr im Automatisierungsnetzwerk zugrundeliegende echtzeitfähige Protokoll kann beispielsweise das EtherCAT Protokoll bilden. Ein Automatisierungsnetzwerk mit zugrundeliegendem EtherCAT Protokoll, nachfolgend kurz EtherCAT Netzwerk genannt, das aus dem Stand der Technik bekannt ist, umfasst eine direkte Verbindung zwischen dem Masterteilnehmer und den einzelnen Netzwerkteilnehmern bzw. Slave-Protokollteilnehmern. Der Masterteilnehmer und die Netzwerkteilnehmer bzw. Slave-Protokollteilnehmer sind also jeweils über eine Punkt-zu-Punkt Verbindung ohne Zwischenstationen, zum Beispiel in Form von Netzwerkverteilern, über ein Datenleitungsnetz miteinander verbunden.

Die oben genannte speicherprogrammierbare Steuerung kann als lokale Maschinensteuerung ausgebildet sein und mit anderen Maschinensteuerungen anderer Maschinen oder Anlagen vernetzt sein. In der Regel weisen die Maschinen oder Anlagen wenigstens eine Schnittstelle für eine externe Verbindung, beispielsweise dem Internet und/oder wenigstens eine Schnittstelle zur Leitebene auf. Dabei bezeichnet eine Leitebene eine zentrale Steuerungsebene der Maschinen oder Anlagen. Also eine zentrale Überwachungsebene, die die einzelnen Maschinen oder Anlagen samt deren jeweiligen lokalen Steuerungen umfasst. Die lokalen Maschinensteuerungen können demnach über ein weiteres Ethernet Netzwerk mit der Leitebene oder dem Internet verbunden sein.

Gerade die Verbindung mit dem Internet birgt die Gefahr vor einem unerwünschten Hacker-Angriff auf die lokalen Maschinensteuerungen und/oder die zentrale Maschinensteuerung. Abhilfe gegen einen solchen Hacker-Angriff kann die Installation einer Firewall für die lokale Maschinensteuerung, die den Masterteilnehmer mit umfasst, bieten. Dies ist ausreichend, da nur über den Masterteilnehmer ein Zugriff auf die Slave-Protokollteilnehmer möglich ist.

Wird das EtherCAT Netzwerk durch Netzwerkverteiler erweitert, die als sogenannte Switche oder Branche ausgebildet sein können, so kann ein externer Angriff auf einen Slave-Protokollteilnehmer und/oder einem anderen Protokollteilnehmer über einen Ein-/Ausgangs-Port eines Netzwerkverteilers erfolgen, insbesondere, wenn der genannte Ein-/Ausgangs-Port mit dem Internet verbunden ist. Durch einen solchen Hackerangriff kann es möglich sein, dass eine Steuerungsaufgabe beziehungsweise der Steuerungsbetrieb im EtherCAT Netzwerk manipuliert wird. Auch bei anderen Ethernet basierten Feldbussen, wie dem PROFINET Feldbussystem, kann dieses Problem auftreten. Eine nach dem Stand der Technik bekannte Möglichkeit zur Lösung dessen, liegt in der Verschlüsselung der Verbindung zwischen der Steuerung, also dem Masterteilnehmer und dem Peripheriegerät, dem Slave-Protokollteilnehmer.

Nachteilig an der Verschlüsselung der Verbindung ist jedoch, dass die Verschlüsselung der Telegramme einen Aufwand verursacht. Vor allem muss dann gewährleistet sein, dass ein Schlüssel, mit dem die Telegramme zum Beispiel vom Masterteilnehmer verschlüsselt und von den einzelnen Slave-Protokollteilnehmern entschlüsselt werden, über eine vertrauenswürdige Verbindung, zu den einzelnen Slave-Protokollteilnehmern übertragen wird. Des Weiteren führt die Verschlüsselung der Telegramme zu einer zeitlichen Verzögerung, die sich dahingehend auswirken kann, dass mit der Verarbeitung eines Telegramms oder eines Abschnitts im Telegramm nicht instantan begonnen werden kann, sondern bis zum Empfang einer gewissen Telegrammlänge in Byte gewartet werden muss und dann kann erst eine Entschlüsselung vor der eigentlichen Verarbeitung vorgenommen werden. Dies kann insbesondere einen großen Nachteil für die Verarbeitung steuerungsrelevanter Daten, zum Beispiel Prozessdaten, bilden, da hierfür kurze Reaktionszeiten unabdingbar sind.

Ein Netzwerkverteiler sowie ein Verfahren zur Datenübertragung in einem Automatisierungsnetzwerk nach den Oberbegriffen der geltenden Ansprüche 1 und 11 sind aus der Druckschrift JP 2017 228887 A bekannt. Eine weitere relevante Druckschrift für die kennzeichnenden Teile der Ansprüche 1 und 11 bildet Jasperneite J. et. al.: "A proposal for a generic real-time Ethernet system", IEEE transactions, May 1, 2009, p. 75-85.

Es ist daher Aufgabe der vorliegenden Erfindung, einen optimierten Netzwerkverteiler in einem Automatisierungsnetzwerk anzugeben, der Schutz vor unerlaubten Zugriffen bietet. Es ist weiterhin Aufgabe der Erfindung ein verbessertes Automatisierungsnetzwerk sowie ein verbessertes Verfahren zur Datenübertragung in dem Automatisierungsnetzwerk bereitzustellen.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Netzwerkverteiler, ein Automatisierungsnetzwerk und ein Verfahren zur Datenübertragung in dem Automatisierungsnetzwerk vorgeschlagen. Das Automatisierungsnetzwerk weist mehrere Netzwerkteilnehmer auf, die über ein Datenleitungsnetz miteinander verbunden sind. Überdies weist das Automatisierungsnetzwerk wenigstens einen Netzwerkverteiler auf, der mehrere Ein-/Ausgangs-Ports, eine Prozessoreinheit und eine Speichereinheit umfasst. Die mehreren Ein-/Ausgangs-Ports sind ausgelegt, jeweils Netzwerkteilnehmer über das Datenleitungsnetz anzuschließen. Die Prozessoreinheit ist ausgelegt, ein Telegramm über einen Ein-/Ausgangs-Port zu empfangen und über einen weiteren Ein-/Ausgangs-Port auszugeben, der in einer Routingtabelle in der Speichereinheit hinterlegt ist. Weiterhin ist die Prozessoreinheit ausgelegt, ein Telegramm daraufhin zu prüfen, ob das Telegramm ein Protokolltelegramm ist und über einen Ein-/Ausgangs-Port, für den voreingestellt ist, dass kein Protokollteilnehmer angeschlossen ist, empfangen worden ist, und das Telegramm bei positiver Prüfung zu verwerfen. Das Prüfen und Verwerfen des Telegramms kann unter eine von der Prozessoreinheit zu berücksichtigende Vorbedingung gestellt sein, wobei insbesondere die Erfüllung der Vorbedingung zu einer Ausnahme vom Verwerfen des Telegramms führen kann.

Die vorgeschlagene Erfindung bietet einen Schutz vor unerlaubten Zugriffen in den Steuerungsbetrieb des Automatisierungsnetzwerks und kann vor Manipulationen der lokalen Maschinensteuerungen und/oder der zentralen Maschinensteuerung schützen, indem Telegramme, die als Protokolltelegramme ausgebildet sind, und von einem Netzwerkteilnehmer, der nicht als Protokollteilnehmer ausgebildet ist, über einen Ein-/Ausgangs-Port des Netzwerkverteilers empfangen werden, vom Netzwerkverteiler verworfen und somit blockiert werden. Dabei umfassen die Protokollteilnehmer Slave-Protokollteilnehmer sowie zumindest einen Masterteilnehmer, der ebenfalls als Protokollteilnehmer ausgebildet ist. Ein solches Telegramm wird nicht an einen Protokollteilnehmer in das Automatisierungsnetzwerk eingeschleust, sondern wird direkt im Netzwerkverteiler blockiert. Insbesondere kann durch das Verwerfen bestimmter Telegramme gänzlich auf die Verwendung einer zeitaufwendigen Verschlüsselung verzichtet werden, um die Übertragung steuerungsrelevanter Daten im Automatisierungsnetzwerk vor Eingriffen Dritter zu schützen, beispielsweise, wenn an einem Ein-/Ausgangs-Port des Netzwerkverteilers ein Netzwerkteilnehmer angeschlossen ist, der eine Internetverbindung besitzt und dadurch global vernetzt ist. Insbesondere kann durch das Verwerfen von Protokolltelegrammen, die über Ein-/Ausgangs-Ports des Netzwerkverteilers empfangen werden, für die voreingestellt ist, dass keine Protokollteilnehmer angeschlossen sind, ein verbesserter Datenschutz der steuerungsrelevanten Daten geschaffen werden.

Die Netzwerkteilnehmer in dem Automatisierungsnetzwerk können in Form eines Master-Slave-Systems ausgebildet sein, wobei damit eine logische bzw. hierarchische Struktur des Masterteilnehmers und der Slave-Protokollteilnehmer gemeint ist. Für die Datenübertragung über das Datenleitungsnetz im Automatisierungsnetzwerk steht in der Regel ein Übertragungskanal zur Verfügung. Diesen müssen sich die Protokollteilnehmer im gegenseitigen Einvernehmen teilen. Dabei ist der Masterteilnehmer der Protokollteilnehmer, der die unaufgeforderte Zugriffsberechtigung auf den Übertragungskanal besitzt und den als Slave-Protokollteilnehmern ausgebildeten anderen Protokollteilnehmern eine Berechtigung dafür erteilen kann. Der Netzwerkverteiler kann zur Verteilung der Telegramme, die als Protokolltelegramme ausgebildet sind, über das Datenleitungsnetz an die über die Ein-/Ausgangs-Ports des Netzwerkverteilers angeschlossenen Netzwerkteilnehmer und Protokollteilnehmer ausgelegt sein. Überdies kann der Netzwerkverteiler wie oben beschrieben auch zum Verwerfen bzw. Blockieren bestimmter Protokolltelegramme ausgelegt sein. Die Slave-Protokollteilnehmer können ausgelegt sein, untereinander sicher mit dem Masterteilnehmer über Protokolltelegramme zu kommunizieren.

In einer weiteren Ausführungsform ist die Prozessoreinheit ausgelegt, mithilfe einer Portkennung in der Speichereinheit zu prüfen, ob der über den Ein-/Ausgangs-Port des Netzwerkverteilers angeschlossene Netzwerkteilnehmer, der das Telegramm versendet hat, als Protokollteilnehmer ausgebildet ist. Eine Portkennung ist in der Speichereinheit hinterlegt, wenn der über den Ein-/Ausgangs-Port angeschlossene Netzwerkteilnehmer als Protokollteilnehmer ausgebildet ist. Eine einfache und kostengünstige Möglichkeit zur Unterscheidung der über die einzelnen Ein-/Ausgangs-Ports des Netzwerkverteilers angeschlossenen Netzwerkteilnehmer bietet die Verwendung der Portkennung für die einzelnen Ein-/Ausgangs-Ports des Netzwerkverteilers. Auch kann die Portkennung für eine verbesserte Netzwerkstruktur sorgen und zu einer vereinfachten Wartung des Automatisierungsnetzwerks beitragen und den Datenschutz im Automatisierungsnetzwerk verbessern.

Gemäß einer weiteren Ausführungsform ist die Prozessoreinheit ausgelegt, zu prüfen, ob das über den Ein-/Ausgangs-Port empfangene Protokolltelegramm eine Telegrammkennung aufweist. Die Prozessoreinheit ist ferner ausgelegt, das Telegramm auf der Grundlage der Telegrammkennung als Protokolltelegramm zu erkennen. Ein Telegramm kann als Protokolltelegramm mit einem bestimmten Feldbusprotokoll ausgebildet sein, zum Beispiel kann das bestimmte Feldbusprotokoll das echtzeitfähige EtherCAT Protokoll sein. Das bestimmte Feldbusprotokoll kann jedoch auch vom EtherCAT Protokoll abweichen und in Form eines anderen Feldbusprotokolls ausgebildet sein, beispielsweise in Form des PROFINET Standards (PROFINET: Process Field Network). Für den PROFINET Standard wird ein eigener Ethertypewert in einem Protokollfeld des Telegramms genutzt, der im Hexadezimalsystem den Wert 0x8892 aufweist. Zusätzlich wird für den PROFINET Standard das der Transportschicht des OSI-Schichten Modells (OSI: Open Systems Interconnection) zugeordnete UDP-Protokoll genutzt (UDP: User Datagram Protocol). Das OSI-Modell ist ein Referenzmodell für Protokolle in Form einer Schichtenarchitektur, wobei die Transportschicht der vierten Schicht entspricht. In beiden genannten Fällen kann die Telegrammkennung zur Identifikation der Protokolltelegramme dienen und für das EtherCAT Protokoll abweichend zum PROFINET Standard bzw. einem anderen Feldbusprotokoll ausgebildet sein.

Das vorgeschlagene Verfahren kann insbesondere flexibel an die Anforderungen des Automatisierungsnetzwerks und des Netzwerkverteilers angepasst werden und die einzelnen Verfahrensschritte können variiert werden, also zum Beispiel die Prüfung, ob das Telegramm eine Telegrammkennung aufweist bzw. die Prüfung, ob eine Portkennung für einen über einen Ein-/Ausgangs-Port des Netzwerkverteilers angeschlossenen Protokollteilnehmer in der Speichereinheit hinterlegt ist. Wird das Vorhandensein der Telegrammkennung geprüft, so kann instantan festgestellt werden, ob es sich um ein Protokolltelegramm, also ein steuerungsrelevantes Telegramm handelt oder nicht. Wird zunächst die Portkennung geprüft, so kann instantan festgestellt werden, ob über den jeweiligen Ein-/Ausgangs-Port Netzwerkteilnehmer angeschlossen sind, die nicht als Protokollteilnehmer ausgebildet sind.

In einer weiteren Ausführungsform ist ein als Protokolltelegramm ausgebildetes Telegramm als ein Ethernet Telegramm ausgebildet. Das Ethernet Telegramm weist einen Ethernet-Kopfabschnitt und einen Ethernet-Datenabschnitt auf. Die Telegrammkennung umfasst eine erste Kennung und eine zweite Kennung, wobei der Ethernet-Kopfabschnitt die erste Kennung der Telegrammkennung umfasst. Die Prozessoreinheit ist ausgelegt, die erste Kennung der Telegrammkennung im Ethernet-Kopfabschnitt auszuwerten. Ist das Protokolltelegramm als Ethernet Telegramm ausgebildet, so kann die bewährte Ethernet Technologie mit dem nach der IEEE 802.3 Norm festgelegten Datenframe Aufbau für ein Ethernet Datenpaket genutzt werden. Beispielsweise kann die erste Kennung der Telegrammkennung als Ethertypewert in dem oben genannten Protokollfeld ausgebildet sein und für ein EtherCAT Protokolltelegramm den Wert 0x88A4 im Hexadezimalsystem aufweisen oder den Wert 0x0800 für das IP-Protokoll (IP: Internet Protocol), sofern das EtherCAT Protokolltelegramm in einen UDP/IP Datenframe eingebettet ist. Protokolltelegramme mit davon abweichenden Feldbusprotokollen weisen folglich einen anderen Ethertypewert auf. Beispielsweise 0x8892 im Hexadezimalsystem für das PROFINET-Protokoll (PROFINET: Process Field Network). Der Ethertypewert gibt Auskunft über das verwendete Protokoll der nächsthöheren Schicht innerhalb der Nutzdaten, also innerhalb des Ethernet-Datenabschnitts, wobei eine Schicht und eine nächsthöhere Schicht nach dem OSI-Modell definiert sind.

Gemäß einer weiteren Ausführungsform ist ein als Protokolltelegramm ausgebildetes Telegramm als ein Ethernet Telegramm ausgebildet. Das Ethernet Telegramm weist einen Ethernet-Kopfabschnitt und einen Ethernet-Datenabschnitt auf, wobei der Ethernet-Datenabschnitt einen Feldbusprotokoll-Kopfabschnitt aufweist. Die Telegrammkennung umfasst eine erste Kennung und eine zweite Kennung. Der Ethernet-Kopfabschnitt umfasst die erste Kennung der Telegrammkennung und der Feldbusprotokoll-Kopfabschnitt umfasst die zweite Kennung der Telegrammkennung. Die Prozessoreinheit ist ausgelegt, die erste Kennung der Telegrammkennung im Ethernet-Kopfabschnitt und die zweite Kennung der Telegrammkennung im Feldbusprotokoll-Kopfabschnitt auszuwerten. Der bekannte Ethernet Standard kann für den vorgeschlagenen Netzwerkverteiler und das vorgeschlagene Verfahren genutzt werden.

Ist der Feldbusprotokoll-Kopfabschnitt als ein EtherCAT-Kopfabschnitt ausgebildet, so kann insbesondere der bewährte echtzeitfähige EtherCAT Standard genutzt werden. Hierbei kann die erste Kennung der Telegrammkennung zum Beispiel als Ethertypewert im Ethernet-Kopfabschnitt ähnlich zur obigen Erläuterung ausgebildet sein. Die zweite Kennung der Telegrammkennung im Feldbusprotokoll-Kopfabschnitt kann zum Beispiel, sofern das EtherCAT Feldbusprotokoll genutzt wird, als EtherCAT Protokolltypwert im Typfeld ausgebildet sein. Mit dem Wert 0x1 im Hexadezimalsystem bei zugrundeliegendem EtherCAT Feldbusprotokoll kann der Verarbeitungseinheit eines Slave-Protokollteilnehmers angezeigt werden, dass die Verarbeitungseinheit das Protokolltelegramm, das als EtherCAT Protokolltelegramm ausgebildet sein kann, verarbeiten kann. Die zweite Kennung der Telegrammkennung kann also einen Feldbusprotokollwert aufweisen, der das jeweilige Feldbusprotokoll kennzeichnet. Darüber hinaus können die erste und die zweite Kennung der Telegrammkennung bei einem alternativ genutzten anderen Feldbusprotokoll einen abweichenden Ethertypewert sowie einen abweichenden Feldbusprotokollwert aufweisen.

Es wird vorgeschlagen, dass die Vorbedingung, unter der ein Prüfen und Verwerfen eines Telegramms gestellt ist, ein Feststellen, ob die Adresse des Telegramms einer vorgegebenen Adresse entspricht, umfasst. Die Telegramme, die als Protokolltelegramme ausgebildet sein können, von einem Netzwerkteilnehmer, der nicht als Protokollteilnehmer ausgebildet ist, werden also nicht exklusiv verworfen durch die Prozessoreinheit des Netzwerkverteilers, sondern können durch Feststellen des Entsprechens der Adresse eines Protokolltelegramms und der vorgegebenen Adresse eines Protokollteilnehmers auch als vertrauenswürdig eingestuft werden und von der Prozessoreinheit an den jeweiligen Empfänger weitergeleitet werden. Hierbei ist denkbar, dass der Masterteilnehmer der Prozessoreinheit des Netzwerkverteilers die Adresse vorgibt und beispielsweise in einer Speichereinheit des Netzwerkverteilers hinterlegt. Die vorgegebene Adresse kann dabei zum Beispiel als MAC-Adresse (MAC: Media Access Control) des Absenders, also als Absenderadresse, ausgebildet sein. Eine davon abweichende Ausgestaltung der vorgegebenen Adresse des Absenders über VLAN IDs (VLAN: Virtual Local Area Network) oder Segmentadressen für EtherCAT Segmente ist ebenfalls denkbar.

Gemäß einer weiteren Ausführungsform ist das Automatisierungsnetzwerk als ein Master-Slave-System ausgelegt. Ein Protokollteilnehmer des Automatisierungsnetzwerks ist als der Masterteilnehmer ausgebildet, der ausgelegt ist, Telegramme, die als Protokolltelegramme ausgebildet sind, über das Datenleitungsnetz auszugeben. Die Slave-Protokollteilnehmer sind zur Verarbeitung der Protokolltelegramme ausgelegt. Der Masterteilnehmer ist weiter ausgebildet, in der Prozessoreinheit des Netzwerkverteilers einzustellen, das an einem Ein-/Ausgangs-Port des Netzwerkverteilers kein Protokollteilnehmer angeschlossen ist. Durch die festgelegte Hierarchie im Automatisierungsnetzwerk kann eine transparente Netzwerkstruktur erreicht werden, bei der der Masterteilnehmer zur Einstellung der Prozessoreinheit des Netzwerkverteilers sowie zur Einstellung der Slave-Protokollteilnehmer ausgelegt sein kann.

In einer weiteren Ausführungsform ist der Masterteilnehmer ausgelegt, eine Netzwerkstruktur der Netzwerkteilnehmer vorzugeben und die vorgegebene Netzwerkstruktur an die Prozessoreinheit des Netzwerkverteilers über das Datenleitungsnetz zu übermitteln. Die Prozessoreinheit ist ausgelegt, die Ein-/Ausgangs-Ports des Netzwerkverteilers, an denen Protokollteilnehmer über das Datenleitungsnetz angeschlossen sind, auf der Grundlage der vorgegebenen Netzwerkstruktur mit der Portkennung in der Speichereinheit zu kennzeichnen. Gibt der Masterteilnehmer dem Netzwerkverteiler die Netzwerkstruktur mit den über die Ein-/Ausgangs-Ports angeschlossenen Netzwerkteilnehmern vor, so kann dies vorteilhaft Aufwand und Zeit ersparen, da die Prozessoreinheit die Portkennung für die Ein-/Ausgangs-Ports des Netzwerkverteilers sofort erstellen und sie in dessen Speichereinheit hinterlegen kann.

Gemäß einer weiteren Ausführungsform ist der Masterteilnehmer ausgelegt, eine Netzwerkstruktur der Netzwerkteilnehmer mittels Abfragetelegrammen zu erfassen. Empfängt ein Netzwerkteilnehmer, der als Protokollteilnehmer ausgebildet ist, ein Abfragetelegramm, so ist der Protokollteilnehmer ausgelegt, eine Protokollteilnehmerinformation in das Abfragetelegramm einzutragen und das Abfragetelegramm an den Masterteilnehmer zurückzusenden, sofern kein nachfolgender Protokollteilnehmer über das Datenleitungsnetz angeschlossen ist. Empfängt der Netzwerkverteiler ein Abfragetelegramm über den Ein-/Ausgangs-Port, so ist der Netzwerkverteiler ausgelegt, eine Portinformation in das Abfragetelegramm einzutragen und das Abfragetelegramm an den Masterteilnehmer zurückzusenden. Der Masterteilnehmer ist ausgelegt, auf der Grundlage der Portinformation weitere Abfragetelegramme an den Netzwerkverteiler auszugeben. Die Prozessoreinheit des Netzwerkverteilers leitet die weiteren Abfragetelegramme über den dem jeweiligen Abfragetelegramm in der Routingtabelle in der Speichereinheit hinterlegten weiteren Ein-/Ausgangs-Port an den über das Datenleitungsnetz angeschlossenen Netzwerkteilnehmer weiter.

Der Masterteilnehmer ist ausgelegt, auf der Grundlage der Protokollteilnehmerinformation der empfangenen weiteren Abfragetelegramme, der Prozessoreinheit des Netzwerkverteilers zu übermitteln, an welchen der mehreren Ein-/Ausgangs-Ports des Netzwerkverteilers Protokollteilnehmer über das Datenleitungsnetz angeschlossen sind. Die Prozessoreinheit ist ausgelegt, die Ein-/Ausgangs-Ports des Netzwerkverteilers, an denen ein Protokollteilnehmer über das Datenleitungsnetz angeschlossen ist, mit der Portkennung in der Speichereinheit zu kennzeichnen. Durch eine dynamische Erfassung der Netzwerkstruktur durch den Masterteilnehmer kann eine hohe Flexibilität in Bezug auf die Ausgestaltung und die Konfiguration des Automatisierungsnetzwerks samt dessen Netzwerkteilnehmer erlangt werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Aufbau eines Automatisierungsnetzwerks mit Netzwerkteilnehmern;
Figur 2 einen schematischen Aufbau eines Netzwerkverteilers; und
Figur 3 einen schematischen Aufbau eines ersten bis dritten Telegrammaufbaus einer Datenstruktur, die in einem Verfahren zur Datenübertragung in dem Automatisierungsnetzwerk eingesetzt wird.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten handelt.

Automatisierungsnetzwerke 100 sind üblicherweise als Feldbussysteme verwirklicht, bei denen die Netzwerkteilnehmer 300 über den Feldbus miteinander vernetzt sind. Das Automatisierungsnetzwerk 100 kann einen Masterteilnehmer 105 und wenigstens einen Netzwerkverteiler 115 aufweisen. Der Netzwerkverteiler 115 kann dazu ausgelegt sein, Telegramme, die als Protokolltelegramme ausgebildet sein können und vom Masterteilnehmer 105 als Protokollteilnehmer 101 über ein Datenleitungsnetz 200 ausgegeben werden, an die über die einzelnen Ein-/Ausgangs-Ports PX angeschlossenen Netzwerkteilnehmer 300, die als Slave-Protokollteilnehmer 110 ausgebildete Protokollteilnehmer 101 umfassen können, über das Datenleitungsnetz 200 zu versenden. Die genannten Netzwerkteilnehmer 300 bzw. Protokollteilnehmer 101 können dazu ausgelegt sein, mit Steuerungseinheiten Daten auszutauschen, wobei dazu in der Regel echtzeitfähige Protokolle wie beispielsweise das EtherCAT Protokoll eingesetzt werden. Das Automatisierungsnetzwerk 100 kann als Master-Slave-System ausgebildet sein. Die Erfindung wird nachfolgend beispielhaft anhand des echtzeitfähigen EtherCAT Protokolls erläutert und ist nicht auf eine Master-Slave-Hierarchie beschränkt.

Nachfolgend wird unter dem Begriff im Durchlauf ("on the fly") verstanden, dass eine Verarbeitungseinheit eines Slave-Protokollteilnehmers 110 ausgelegt ist, mit der Verarbeitung eines Protokolltelegramms zu beginnen, bevor das Protokolltelegramm vollständig über den Eingangs-Port eines Slave-Protokollteilnehmers 110 empfangen worden ist. Wird nachfolgend von der Verarbeitung eines Protokolltelegramms im Durchlauf gesprochen, so ist damit das Auslesen der an den jeweiligen Slave-Protokollteilnehmer 110 adressierten Ausgangsdaten, sowie das Einfügen von Eingangsdaten in das Protokolltelegramm und das Weiterleiten des Protokolltelegramms an den nachfolgenden Slave-Protokollteilnehmer 110 mit umfasst.

Nachfolgend wird unter einem Protokolltelegramm ein Telegramm verstanden, über das der Masterteilnehmer 105 als Protokollteilnehmer 101 mit den Slave-Protokollteilnehmern 110 als Protokollteilnehmer 101 kommuniziert, um steuerungsrelevante Daten auszutauschen. Vorzugsweise ist das Protokolltelegramm als EtherCAT Protokolltelegramm ausgebildet. Die Slave-Protokollteilnehmer 110 versenden eigenständig keine Protokolltelegramme. Jedoch können Netzwerkteilnehmer 300, die nicht als Slave-Protokollteilnehmer 110 ausgebildet sind, eigenständig Protokolltelegramme an die Protokollteilnehmer 101 versenden. Der Masterteilnehmer 105 kann mit anderen Netzwerkteilnehmern 300 über abweichend ausgebildete Telegramme kommunizieren, beispielsweise über Ethernet Telegramme oder Telegramme mit zugrundeliegendem OPC-UA Protokoll (OPC-UA: Open Platform Communications-Unified Architecture). Insbesondere können Netzwerkteilnehmer 300 mit Protokollteilnehmern 101 über das OPC-UA Protokoll kommunizieren.

Nachfolgend soll die Bezeichnung Verwerfen eines Protokolltelegramms gleichgesetzt werden können mit Blockieren eines Protokolltelegramms für die Weiterleitung über einen weiteren Ein-/Ausgangs-Port PXdes Netzwerkverteilers 115, sodass das Protokolltelegramm nach dem Netzwerkverteiler 115 nicht über das Datenleitungsnetz 200 innerhalb des Automatisierungsnetzwerks 100 gelangen kann und den Empfänger, der der Masterteilnehmer 105 und/oder ein Slave-Protokollteilnehmer 110 also ein Protokollteilnehmer 101 sein kann, nicht erreicht.

Die Kernidee der vorliegenden Erfindung liegt in der Bereitstellung eines Netzwerkverteilers 115, der Telegramme, die als Protokolltelegramme identifiziert und über einen Ein-/Ausgangs-Port PX des Netzwerkverteilers 115 empfangen werden, für den voreingestellt ist, dass kein Protokollteilnehmer 101 angeschlossen ist, gezielt blockiert. Dabei kann das Prüfen Verwerfen der Telegramme unter eine zu berücksichtigende Vorbedingung gestellt sein. Das Blockieren von Protokolltelegrammen kann dabei auf beliebig viele Ein-/Ausgangs-Ports PX des Netzwerkverteilers 115 erweitert werden, wenn an mehreren Ein-/Ausgangs-Ports PX Netzwerkteilnehmer 300 über das Datenleitungsnetz 200 angeschlossen sind, die nicht als Protokollteilnehmer 101 ausgebildet sind. Die Vorbedingung unter der das Prüfen und Verwerfen der Telegramme gestellt sein kann, führt dazu, dass Telegramme bzw. Protokolltelegramme vom Blockieren bzw. Verwerfen ausgenommen werden, sofern die Vorbedingung erfüllt ist.

Die Erfindung ist nicht auf die Verwendung echtzeitfähiger EtherCAT Protokolltelegramme beschränkt, auch wenn diese die bevorzugten Protokolltelegramme darstellen, sondern kann in allen Automatisierungsnetzwerken 100 eingesetzt werden, in denen der Masterteilnehmer 105 mit Slave-Protokollteilnehmern 110 über Telegramme eines bestimmten Protokolls kommunizieren kann und Netzwerkteilnehmer 300 mit Slave-Protokollteilnehmern 110 und/oder dem Masterteilnehmer 105 über Telegramme eines anderen Protokolls Daten bzw. Informationen austauschen.

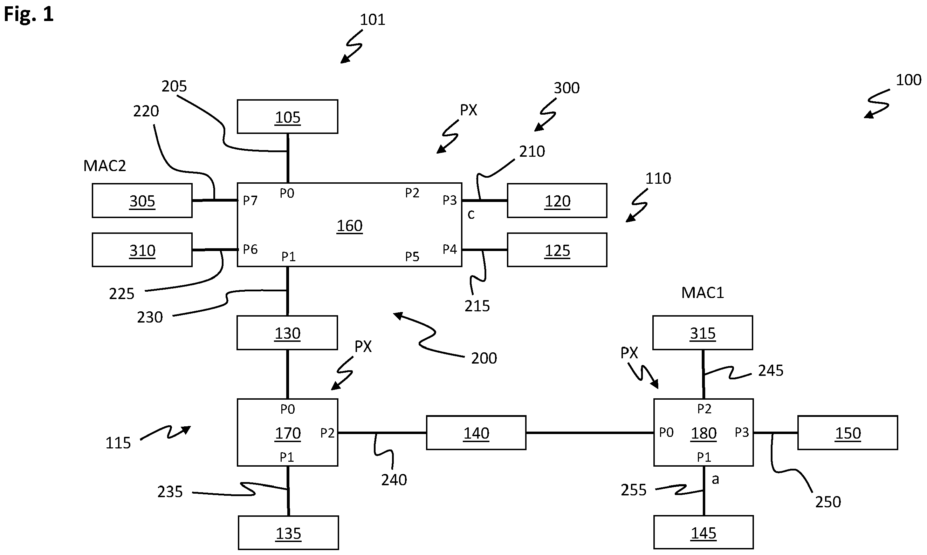

Der Aufbau und die Funktionsweise des erfindungsgemäßen Automatisierungsnetzwerks 100 und des Netzwerkverteilers 115 wird nachfolgend anhand der Figuren 1 bis 3 beschrieben, wobei in der Beschreibung, sofern sinnvoll und erforderlich, die zugehörigen Bezugszeichen aus den drei Figuren Verwendung finden.

Figur 1 zeigt einen schematischen Aufbau eines Automatisierungsnetzwerks 100 mit Netzwerkteilnehmern 300, das für ein Verfahren zur Datenübertragung in dem Automatisierungsnetzwerk 100 ausgelegt ist. Das Automatisierungsnetzwerk 100 umfasst mehrere Netzwerkteilnehmer 300, die über ein Datenleitungsnetz 200 miteinander verbunden sind. Das Automatisierungsnetzwerk 100 weist Protokollteilnehmer 101 auf, wobei der Masterteilnehmer 105 und Slave-Protokollteilnehmer 110 als Protokollteilnehmer 101 ausgebildet sind. Das Automatisierungsnetzwerk 100 ist in Form einer Master-Slave-Struktur ausgebildet. Die Master-Slave-Struktur bildet dabei die Zugriffshierarchie auf das Datenleitungsnetz 200 ab, das heißt der Masterteilnehmer 105 besitzt die Zugriffsberechtigung auf das Datenleitungsnetz 200 und kann den Slave-Protokollteilnehmern 110 im Automatisierungsnetzwerk 100 jeweils einen Zugriff einräumen.

Der Masterteilnehmer 105 ist über eine erste Datenleitung 205 mit einem ersten Ein-/Ausgangs-Port P0 eines ersten Netzwerkverteilers 160 verbunden. Der erste Netzwerkverteiler 160 umfasst mehrere Ein-/Ausgangs-Ports PX, wobei das X im Bezugszeichen der Ein-/Ausgangs-Ports PX als Index für einen jeweiligen Ein-/Ausgangs-Port PX, also beispielsweise beim ersten Netzwerkverteiler 160 für den ersten bis achten Ein-/Ausgangs-Port P0 bis P7 genutzt wird. Der erste Netzwerkverteiler 160 kann über einen vierten Ein-/Ausgangs-Port P3 über eine zweite Datenleitung 210 mit einem ersten Protokollteilnehmer 120 verbunden sein. Der Masterteilnehmer 105 kann ausgelegt sein, eine zentrale Konfiguration des Automatisierungsnetzwerks 100 samt der einzelnen Slave-Protokollteilnehmer 110 vorzunehmen. Der erste Protokollteilnehmer 120 kann als Slave-Protokollteilnehmer 110 ausgelegt sein und eine Verarbeitungseinheit aufweisen, die in Figur 1 nicht dargestellt ist. Die Verarbeitungseinheit des ersten Protokollteilnehmers 120 kann dazu ausgelegt sein, Telegramme, die als Protokolltelegramme vom Masterteilnehmer 105 ausgegeben werden, im Durchlauf zu verarbeiten. Beispielsweise kann der erste Protokollteilnehmer 120 als Kopplerelement EK1100 der Firma Beckhoff Automation GmbH & Co. KG ausgebildet sein, wobei an das Kopplerelement EK110 weitere Slave-Protokollteilnehmer 110 angeschlossen werden können. Zur besseren Übersichtlichkeit werden in Figur 1 lediglich die Ein-/Ausgangs-Ports PX der Netzwerkverteiler 115 dargestellt. Gleichwohl weisen die anderen Netzwerkteilnehmer 300 samt den Protokollteilnehmern 101 in dem Automatisierungsnetzwerk 100 Ein-/Ausgangs-Ports PX auf, über die die Netzwerkteilnehmer 300 und Protokollteilnehmer 101 über das Datenleitungsnetz 200 miteinander verbunden sind. Nachfolgend wird auf diesen Aspekt nicht mehr eingegangen.

Über einen fünften Ein-/Ausgangs-Port P4 des ersten Netzwerkverteilers 160 und über eine dritte Datenleitung 215 kann der erste Netzwerkverteiler 160 mit einem zweiten Protokollteilnehmer 125 verbunden sein. Beispielsweise kann der zweite Protokollteilnehmer 125 als ein Kopplerelement ausgebildet sein. Auch das Kopplerelement kann zum Anschluss weiterer Protokollteilnehmer, die als Slave-Protokollteilnehmer 110 ausgebildet sein können, dienen. Der zweite Protokollteilnehmer 125 kann, wie der erste Protokollteilnehmer 120 auch, als Slave-Protokollteilnehmer 110 ausgebildet sein. Beispielsweise ist über einen dritten Ein-/Ausgangs-Port P2 sowie über einen sechsten Ein-/Ausgangs-Port P5 des ersten Netzwerkverteilers 160 jeweils kein Netzwerkteilnehmer 300 über eine Datenleitung angeschlossen. Über den dritten Ein-/Ausgangs-Port P2 sowie den sechsten Ein-/Ausgangs-Port P5 des ersten Netzwerkverteilers 160 können aber grundsätzlich Netzwerkteilnehmer 300 und/oder Protokollteilnehmer 101 angeschlossen werden.

Weiterhin kann der erste Netzwerkverteiler 160 über einen achten Ein-/Ausgangs-Port P7 und über eine vierte Datenleitung 220 mit einem ersten Netzwerkteilnehmer 305 verbunden sein. Der erste Netzwerkteilnehmer 305 kann beispielsweise als Ethernet-Teilnehmer ausgebildet sein. Insbesondere kann der erste Netzwerkteilnehmer 305 dazu ausgelegt sein, eigenständig Telegramme, die auch als Protokolltelegramme ausgebildet sein können, über die vierte Datenleitung 220 an den achten Ein-/Ausgangs-Port P7 des ersten Netzwerkverteilers 160 im Automatisierungsnetzwerk 100 zu versenden. Im Vergleich dazu legen Slave-Protokollteilnehmer 110 lediglich Daten oder Informationen in ein Protokolltelegramm von dem Masterteilnehmer 105 ab, oder entnehmen Daten oder Informationen aus dem Protokolltelegramm. Das aktive eigenständige Versenden von Protokolltelegrammen erfolgt nicht durch die Slave-Protokollteilnehmer 110, sondern in der Regel nur vom Masterteilnehmer 105.

Über einen siebten Ein-/Ausgangs-Port P6 und über eine fünfte Datenleitung 225 kann der erste Netzwerkverteiler 160 mit einem zweiten Netzwerkteilnehmer 310 verbunden sein. Der zweite Netzwerkteilnehmer 310 kann ähnlich zum ersten Netzwerkteilnehmer 305 ausgebildet sein. Zum Beispiel kann der zweite Netzwerkteilnehmer 310 ebenfalls als Ethernet-Teilnehmer ausgebildet sein und dazu ausgelegt sein, eigenständig Telegramme, die auch als Protokolltelegramme ausgebildet sein können, über die fünfte Datenleitung 225 an den siebten Ein-/Ausgangs-Port P6 des ersten Netzwerkverteilers 160 zu versenden. Der erste Netzwerkverteiler 160 ist weiterhin über einen zweiten Ein-/Ausgangs-Port P1 und eine sechste Datenleitung 230 mit einem dritten Protokollteilnehmer 130 und über einen ersten Ein-/Ausgangs-Port P0 eines zweiten Netzwerkverteilers 170 mit dem zweiten Netzwerkverteiler 170 verbunden. Der dritte Protokollteilnehmer 130 kann ähnlich zu dem ersten Protokollteilnehmer 120 und dem zweitem Protokollteilnehmer 125 als Slave-Protokollteilnehmer 110 ausgebildet sein. Im Unterschied zu dem ersten Protokollteilnehmer 120 und dem zweiten Protokollteilnehmer 125 kann der dritte Protokollteilnehmer 130 zum Beispiel nicht als ein Kopplerelement ausgebildet sein, an dem weitere Slave-Protokollteilnehmer 110 angeschlossen sein können, sondern der dritte Protokollteilnehmer 130 kann als einzelner Slave-Protokollteilnehmer 110 ausgebildet sein. Der zweite Netzwerkverteiler 170 kann mehrere Ein-/Ausgangs-Ports PX, im in Figur 1 dargestellten Ausführungsbeispiel drei Ein-/Ausgangs-Ports PX, nämlich erste bis dritte Ein-/Ausgangs-Ports P0 bis P2 aufweisen.

Über einen zweiten Ein-/Ausgangs-Port P1 und eine siebte Datenleitung 235 kann der zweite Netzwerkverteiler 170 mit einem vierten Protokollteilnehmer 135 verbunden sein. Der vierte Protokollteilnehmer 135 kann ähnlich zum zweiten Protokollteilnehmer 125 als Slave-Protokollteilnehmer 110 und als ein Kopplerelement ausgebildet sein. Es wird auf die Wiederholung der oben stehenden Merkmale für den vierten Protokollteilnehmer 135 verzichtet. Der zweite Netzwerkverteiler 170 kann über einen dritten Ein-/Ausgangs-Port P2 und eine achte Datenleitung 240 mit einem fünften Protokollteilnehmer 140 und über einen ersten Ein-/Ausgangs-Port P0 eines dritten Netzwerkverteilers 180 mit dem dritten Netzwerkverteiler 180 verbunden sein. Der fünfte Protokollteilnehmer 140 kann ähnlich zum dritten Protokollteilnehmer 130 als Slave-Protokollteilnehmer 110 zur Verarbeitung der Protokolltelegramme im Durchlauf ausgebildet sein. Der dritte Netzwerkverteiler 180 kann ebenfalls mehrere Ein-/Ausgangs-Ports PX, im in Figur 1 dargestellten Ausführungsbeispiel vier Ein-/Ausgangs-Ports PX, nämlich erste bis vierte Ein-/Ausgangs-Ports P0 bis P3 aufweisen. Über einen zweiten Ein-/Ausgangs-Port P1 und eine elfte Datenleitung 255 ist der dritte Netzwerkverteiler 180 mit einem sechsten Protokollteilnehmer 145 verbunden. Der sechste Protokollteilnehmer 145 kann ähnlich zum zweiten Protokollteilnehmer 125 und ähnlich zum vierten Protokollteilnehmer 135 als Slave-Protokollteilnehmer 110 zur Verarbeitung der Protokolltelegramme im Durchlauf und als ein Kopplerelement ausgebildet sein.

Der dritte Netzwerkverteiler 180 ist über einen vierten Ein-/Ausgangs-Port P3 und über eine zehnte Datenleitung 250 mit einem siebten Protokollteilnehmer 150 verbunden. Der siebte Protokollteilnehmer 150 kann ähnlich zum dritten Protokollteilnehmer 130 und ähnlich zum fünften Protokollteilnehmer 140 als Slave-Protokollteilnehmer 110 zur Verarbeitung der Protokolltelegramme im Durchlauf ausgebildet sein. Der dritte Netzwerkverteiler 180 ist über einen dritten Ein-/Ausgangs-Port P2 und über eine neunte Datenleitung 245 mit einem dritten Netzwerkteilnehmer 315 verbunden. Der dritte Netzwerkteilnehmer 315 kann ähnlich zu dem ersten Netzwerkteilnehmer 305 und ähnlich zu dem zweiten Netzwerkteilnehmer 310 als Ethernet-Teilnehmer ausgebildet sein. Beispielsweise kann der dritte Netzwerkteilnehmer 315 als ein Ethernet-Switch ausgebildet sein.

Der dritte Netzwerkteilnehmer 315 kann sich als Ethernet-Switch von dem ersten bis dritten Netzwerkverteiler 160, 170, 180 unterscheiden. Der erste bis dritte Netzwerkverteiler 160, 170, 180 kann jeweils eine Prozessoreinheit 400 umfassen, die es dem ersten bis dritten Netzwerkverteiler 160, 170, 180 ermöglicht, Protokolltelegramme im Durchlauf wie ein Slave-Protokollteilnehmer 110 zu verarbeiten, insbesondere wenn sich die Protokolltelegramme um echtzeitfähige EtherCAT Telegramme handeln. Der dritte Netzwerkteilnehmer 315 weist diese Funktionalität als Ethernet-Switch nicht auf. Jedoch kann der dritte Netzwerkteilnehmer 315 gleichermaßen wie der erste Netzwerkteilnehmer 305 und der zweite Netzwerkteilnehmer 310 dazu ausgelegt sein, eigenständig Telegramme, die auch Protokolltelegramme mit umfassen können, über die neunte Datenleitung 245 an den dritten Ein-/Ausgangs-Port P2 des dritten Netzwerkverteilers 180 zu versenden.

In einem Automatisierungsnetzwerk 100 bei dem der Telegrammverkehr auf dem EtherCAT Standard beruht, nachfolgend EtherCAT Netzwerk genannt, können der erste Netzwerkverteiler 160, der zweite Netzwerkverteiler 170 sowie der dritte Netzwerkverteiler 180 insbesondere als sogenannter "Branch" oder "Switch" ausgebildet sein, und wie oben genannt, zur Verarbeitung von Protokolltelegrammen ausgelegt sein. Die Netzwerkstruktur der Netzwerkteilnehmer 300, des Masterteilnehmers 105 und der Slave-Protokollteilnehmer 110 sowie der Netzwerkverteiler 115 des Automatisierungsnetzwerks 100 ist beispielhaft gewählt worden und schränkt die Erfindung nicht auf diese ein. Auch könnte das Automatisierungsnetzwerk 100 in Figur 1 weitere Netzwerkteilnehmer 300 aufweisen, die nicht dargestellt sind. Dies können weitere Slave-Protokollteilnehmer 110 und/oder ein oder mehrere Netzwerkverteiler 115 sein, wobei an den mehreren Ein-/Ausgangs-Ports PX des einen oder der mehreren Netzwerkverteiler 115 Slave-Protokollteilnehmer 110 über weitere Datenleitungen angeschlossen sein können.

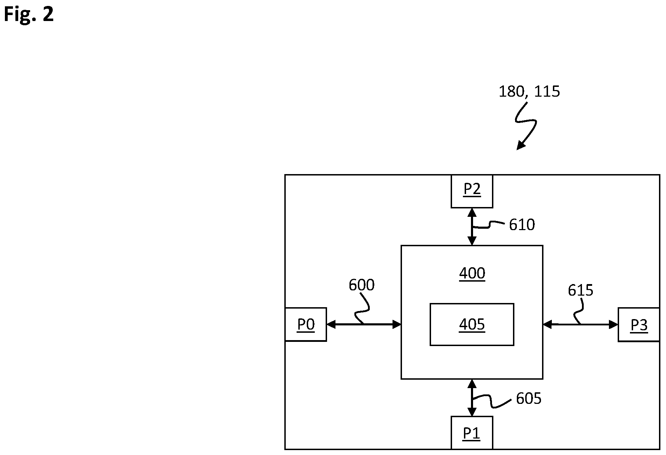

Nachfolgend werden die Merkmale des Automatisierungsnetzwerks 100 samt der Netzwerkteilnehmer 300, der Protokollteilnehmer 101 und insbesondere der Aufbau und die Funktionsweise der Netzwerkverteiler 115 in Bezug auf Figur 1 und Figur 2 erläutert.

Die Netzwerkstruktur kann vom Masterteilnehmer 105 vorgegeben werden und die einzelnen Netzwerkteilnehmer 300, die über die mehreren Ein-/Ausgangs-Ports PX wenigstens eines Netzwerkverteilers 115 über das Datenleitungsnetz 200 angeschlossen sind, die auch Slave-Protokollteilnehmer 110 umfassen können, können an eine in Figur 2 dargestellte Prozessoreinheit 400 des wenigstens einen Netzwerkverteilers 115 übermittelt werden. Die Prozessoreinheit 400 kann ausgelegt sein, die Ein-/Ausgangs-Ports PX des Netzwerkverteilers 115, an denen Protokollteilnehmer 101 über das Datenleitungsnetz 200 angeschlossen sind, auf der Grundlage der vorgegebenen Netzwerkstruktur mit einer Portkennung in einer Speichereinheit 405 des Netzwerkverteilers 115 in Figur 2 zu kennzeichnen. Die Speichereinheit 405 kann beispielsweise eine Porttabelle umfassen, die die Portkennungen der Ein-/Ausgangs-Ports PX umfasst. Es ist überdies auch denkbar, dass eine Routingtabelle in der Speichereinheit 405 die Portkennungen mit umfasst. Die Portkennungen können als Werte oder als Symbole ausgebildet sein und damit können die Ein-/Ausgangs-Ports PX des Netzwerkverteilers 115 gekennzeichnet werden, an denen Protokollteilnehmer 101 angeschlossen sind. Alternativ kann die Portkennung auch für die Kennzeichnung aller Ein-/Ausgangs-Ports PX des Netzwerkverteilers 115 ausgelegt sein, beispielsweise über eine Variable mit zwei Zuständen, bei der der eine Zustand angibt, dass über den Ein-/Ausgangs-Port ein Protokollteilnehmer 101 angeschlossen ist und über den anderen Zustand der Variable kann ausgedrückt werden, dass über den jeweiligen Ein-/Ausgangs-Port ein Netzwerkteilnehmer 300 angeschlossen ist.

In einer Alternative kann der Masterteilnehmer 105 ausgelegt sein, die Netzwerkstruktur der Netzwerkteilnehmer 300 im Automatisierungsnetzwerk 100 mittels Abfragetelegrammen zu erfassen. Diese Alternative ist insbesondere vor der ersten Konfiguration der Netzwerkverteiler 115 und der Protokollteilnehmer 101 denkbar, wobei die Abfragetelegramme ebenfalls als EtherCAT Telegramme wie die Protokolltelegramme ausgebildet sein können. Empfängt ein Netzwerkteilnehmer 300, der als ein Protokollteilnehmer 101 ausgebildet ist, ein Abfragetelegramm, so ist der Protokollteilnehmer 101 ausgelegt, eine Protokollteilnehmerinformation in das Abfragetelegramm einzutragen und das Abfragetelegramm an den Masterteilnehmer 105 über das Datenleitungsnetz 200 zurückzusenden, sofern kein nachfolgender Protokollteilnehmer 101 über das Datenleitungsnetz 200 angeschlossen ist, der als Slave-Protokollteilnehmer 110 ausgebildet sein kann. Ist ein nachfolgender Protokollteilnehmer 101 über das Datenleitungsnetz 200 angeschlossen, so versendet der vorangehende Protokollteilnehmer 101, der ebenfalls als Slave-Protokollteilnehmer 110 ausgebildet sein kann, das Abfragetelegramm an den nachfolgenden Protokollteilnehmer 101 und der letzte Protokollteilnehmer 101 in einer Kette an Protokollteilnehmern 101 sendet das Abfragetelegramm an den Masterteilnehmer 105 zurück. Die Protokollteilnehmerinformation kann ein Wert, ein Symbol oder ähnliches sein, das dem Masterteilnehmer 105 eindeutig zu erkennen gibt, dass sich der Netzwerkteilnehmer 300 um einen Protokollteilnehmer 101 handelt. Auch kann die Protokollteilnehmerinformation eine Auskunft darüber geben, für welche Datenübertragungsrate bzw. Symbolrate der Protokollteilnehmer 101 ausgelegt ist.

Empfängt der Netzwerkverteiler 115 ein Abfragetelegramm über den ersten Ein-/Ausgangs-Port P0, so ist der Netzwerkverteiler 115 ausgelegt, eine Portinformation in das Abfragetelegramm einzutragen und das Abfragetelegramm an den Masterteilnehmer 105 zurückzusenden. Die Portinformation kann wie die Protokollteilnehmerinformation als Wert, als Symbol oder ähnliches ausgebildet sein und dem Masterteilnehmer 105 eine Auskunft über die Ein-/Ausgangs-Ports PX des Netzwerkverteilers 115 geben, an denen über das Datenleitungsnetz 200 Netzwerkteilnehmer 300 angeschlossen sind. Auch kann die Portinformation angeben, für welche Datenübertragungsrate bzw. Symbolrate der jeweilige Ein-/Ausgangs-Port PX ausgelegt ist. Der Masterteilnehmer 105 ist ausgelegt, auf der Grundlage der Portinformation weitere Abfragetelegramme an den Netzwerkverteiler 115 auszugeben, die die Prozessoreinheit 400 des Netzwerkverteilers 115 über den dem jeweiligen Abfragetelegramm in der Routingtabelle in der Speichereinheit 405 hinterlegten Ein-/Ausgangs-Port PX an den über das Datenleitungsnetz 200 angeschlossenen Netzwerkteilnehmer 300 weiterleitet. Der Masterteilnehmer 105 ist ausgelegt, auf der Grundlage der Protokollteilnehmerinformation der empfangenen weiteren Abfragetelegramme, der Prozessoreinheit 400 des Netzwerkverteilers 115 zu übermitteln, an welchen der mehreren Ein-/Ausgangs-Ports PX des Netzwerkverteilers 115 Protokollteilnehmer 101 über das Datenleitungsnetz 200 angeschlossen sind. Die Prozessoreinheit ist ausgelegt, die Ein-/Ausgangs-Ports PX des Netzwerkverteilers 115, an denen ein Protokollteilnehmer 101 über das Datenleitungsnetz 200 angeschlossen ist, mit der Portkennung in der Speichereinheit 405 zu kennzeichnen.

Ferner ist der Masterteilnehmer 105 ausgelegt, in der Prozessoreinheit 400 des Netzwerkverteilers 115 in Figur 2 einzustellen, dass die Prozessoreinheit 400 des Netzwerkverteilers 115 ein Telegramm prüft, ob das Telegramm ein Protokolltelegramm ist und über einen Ein-/Ausgangs-Port PX des Netzwerkverteilers 115 empfangen worden ist, für den voreingestellt ist, dass kein Protokollteilnehmer 101 angeschlossen ist. Bei positivem Prüfergebnis ist die Prozessoreinheit 400 des Netzwerkverteilers 115 ausgelegt, das Telegramm zu verwerfen. Der Masterteilnehmer 105 kann die Prozessoreinheit 400 insbesondere dahingehend konfigurieren, dass die Prozessoreinheit 400 eine Vorbedingung zu berücksichtigen hat, unter der das Prüfen und Verwerfen des Telegramms vom Masterteilnehmer 105 gestellt sein kann. Die Vorbedingung unter der das Prüfen und Verwerfen eines Telegramms gestellt ist, umfasst ein Feststellen durch die Prozessoreinheit 400, ob die Adresse des Telegramms einer vorgegebenen Adresse entspricht. Entspricht die Adresse des Telegramms einer vorgegebenen Adresse, also zum Beispiel einer vorgegebenen Absenderadresse, so kann die Prozessoreinheit 400, bei gegebener Voreinstellung durch den Masterteilnehmer 105, ausgelegt sein, das Telegramm im Rahmen des Prüfvorgangs nicht zu verwerfen.

Die Adresse kann als Absenderadresse in Form einer MAC-Adresse (MAC: Media Access Control), als VLAN-ID (VLAN: Virtual Local Area Network) oder als Segmentadresse für ein EtherCAT Segment mit einem oder mehreren Protokollteilnehmern ausgebildet sein. Es ist denkbar, dass der Masterteilnehmer 105 der Prozessoreinheit 400 des Netzwerkverteilers 115 die Adresse in Form einer Absenderadresse eines Protokolltelegramms, das von keinem Protokollteilnehmer an einen Ein-/Ausgangs-Port PX des Netzwerkverteilers 115 gesendet wird, übermittelt, die als vertrauenswürdig eingestuft wird. Die Prozessoreinheit 400 kann das Protokolltelegramm, sofern die Adresse der vorgegebenen Adresse entspricht, also die Vorbedingung unter der das Prüfen und Verwerfen eines Telegramms gestellt ist, dann an den jeweiligen Protokollteilnehmer 101 über den für den jeweiligen Protokollteilnehmer 101 in der Routingtabelle hinterlegten Ein-/Ausgangs-Port PX über das Datenleitungsnetz 200 weiterleiten.

Ferner ist denkbar, dass die Vorbedingung unter der das Prüfen und Verwerfen eines Telegramms vom Masterteilnehmer 105 gestellt sein kann auch in alternativer Weise umgesetzt wird. Weist das Automatisierungsnetzwerk 100 weitere Masterteilnehmer auf, die über Ein-/Ausgangs-Ports PX des Netzwerkverteilers 115 angeschlossen sind, so kann die Prozessoreinheit 400 in einer alternativen Ausgestaltung der Vorbedingung ausgelegt sein, festzustellen, ob über die Ein-/Ausgangs-Ports PX des Netzwerkverteilers 115 weitere Masterteilnehmer angeschlossen sind. Sollen von den weiteren Masterteilnehmern keine Telegramme, die als Protokolltelegramme ausgebildet sein können, vom Netzwerkverteiler 115 über einen Ein-/Ausgangs-Port PX empfangen werden, so kann die Vorbedingung statt einer Ausnahme vom Verwerfen der Telegramme auch in Form eines Verwerfens der Telegramme der weiteren Masterteilnehmer ausgebildet sein.

Insbesondere stellt der Masterteilnehmer 105 in der Prozessoreinheit 400 des Netzwerkverteilers 115 ein, dass die Prozessoreinheit 400 das Telegramm bei positiver Prüfung verwirft, also für den Fall, dass das Telegramm ein Protokolltelegramm ist und über einen Ein-/Ausgangs-Port PX empfangen worden ist, für den voreingestellt ist, dass kein Protokollteilnehmer 101 angeschlossen ist. Die Prozessoreinheit 400 kann im Fall der Voreinstellung, dass kein Protokollteilnehmer 101 an einem Ein-/Ausgangs-Port des Netzwerkverteilers angeschlossen ist, dazu ausgelegt sein, zu prüfen, ob in der Speichereinheit 405 keine Portkennung für den Ein-/Ausgangs-Port PX des Netzwerkverteilers 115 hinterlegt ist. Die Portkennung ist dann in der Speichereinheit 405 hinterlegt, wenn sich der über den Ein-/Ausgangs-Port PX des Netzwerkverteilers 115 angeschlossene Netzwerkteilnehmer 300 um einen Protokollteilnehmer 101 handelt. Des Weiteren kann die Protokolleinheit 400 des Netzwerkverteilers 115 in dem Zusammenhang ausgelegt sein zu prüfen, ob das über den Ein-/Ausgangs-Port PX empfangene Protokolltelegramm eine Telegrammkennung aufweist, da die Prozessoreinheit 400 ein Protokolltelegramm auf der Grundlage der Telegrammkennung erkennen kann.

Figur 2 zeigt einen schematischen Aufbau des Netzwerkverteilers 115 in dem Automatisierungsnetzwerk 100 in Figur 1. Zur Erläuterung wurde exemplarisch die Darstellung des dritten Netzwerkverteilers 180 gewählt. Die Erfindung ist jedoch nicht auf die Ausgestaltung des dritten Netzwerkverteilers 180 beschränkt. Auch der erste Netzwerkverteiler 160 sowie der zweite Netzwerkverteiler 170 können jeweils zum Verwerfen von Protokolltelegrammen ausgelegt sein, die über Ein-/Ausgangs-Ports PX empfangen werden, an denen keine Protokollteilnehmer 101 über das Datenleitungsnetz 200 angeschlossen sind, um das Automatisierungsnetzwerk 100 vor unerlaubten Zugriffen und Manipulation zu schützen. Dabei kann das Prüfen und Verwerfen eines Telegramms wie oben beschrieben unter eine Vorbedingung gestellt sein, wobei die Erfüllung der Vorbedingung (Übereinstimmung der Adresse des Telegramms mit der vorgegebenen Adresse) auch dazu führt, dass der Netzwerkverteiler 115, also die Prozessoreinheit 400 des Netzwerkverteilers 115, ein Protokolltelegramm, das von keinem Protokollteilnehmer 101 über einen Ein-/Ausgangs-Port empfangen worden ist, nicht verwirft, sondern an den Empfänger weiterleitet.

Der dritte Netzwerkverteiler 180 umfasst den ersten Ein-/Ausgangs-Port P0, über den der dritte Netzwerkverteiler 180 über die achte Datenleitung 240 mit dem fünften Protokollteilnehmer 140 in dem Automatisierungsnetzwerk 100 in Figur 1 verbunden ist. Über den ersten Ein-/Ausgangs-Port P0 empfängt der dritte Netzwerkverteiler 180 Protokolltelegramme, die vom Masterteilnehmer 105 ausgegeben werden. Der erste Ein-/Ausgangs-Port P0 ist mithilfe einer ersten Interaktionslinie 600 mit der Prozessoreinheit 400 verbunden. Die erste Interaktionslinie 600 ist als Doppelpfeil ausgebildet und deutet vereinfacht an, dass eine bidirektionale Kommunikation bzw. ein Zugriff zwischen dem ersten Ein-/Ausgangs-Port P0 und der Prozessoreinheit 400 möglich ist. Wobei der Zugriff in erster Linie die Routingtabelle in der Speichereinheit 405 sowie die in der Speichereinheit 405 hinterlegten Portkennungen betrifft. Zudem kann eine oder mehrere vorgegebene Adressen, die als Absenderadressen ausgebildet sein können, in der Speichereinheit 405 hinterlegt sein, zur Prüfung der Vorbedingung unter die das Prüfen und Verwerfen eines Telegramms gestellt sein kann. Die genannten Eigenschaften für die erste Interaktionslinie 600 gelten für die nachfolgenden Interaktionslinien ebenfalls. Die Prozessoreinheit 400 umfasst weiterhin die Speichereinheit 405. Dies ist ebenfalls exemplarisch gewählt. Die Speichereinheit 405 kann als FIFO Speicher (FIFO: First In First Out) als separate Einheit verwirklicht sein, auf die die Prozessoreinheit 400 zugreift. Die Prozessoreinheit 400 kann als Hardware-Modul in Form eines Prozessorchips oder als Software-Modul oder als kombiniertes Hard- und Software-Modul verwirklicht sein. Auch ist denkbar, dass ein Modul mehrere separate Einheiten umfasst. Im als EtherCAT Netzwerk ausgebildeten Automatisierungsnetzwerk 100 ist die Prozessoreinheit 400 vorzugsweise als EtherCAT Slave Controller ausgebildet.

Die Prozessoreinheit 400 ist über eine zweite Interaktionslinie 605 mit dem zweiten Ein-/Ausgangs-Port P1 verbunden, über den der dritte Netzwerkverteiler 180 über die elfte Datenleitung 255 mit dem sechsten Protokollteilnehmer 145 in Verbindung steht. Die Prozessoreinheit 400 ist des Weiteren über eine dritte Interaktionslinie 610 mit dem dritten Ein-/Ausgangs-Port P2 verbunden. Über den dritten Ein-/Ausgangs-Port P2 steht der dritte Netzwerkverteiler 180 mithilfe der neunten Datenleitung 245 mit dem dritten Netzwerkteilnehmer 315 in Verbindung. Der dritte Netzwerkteilnehmer 315 ist kein Protokollteilnehmer 101. Überdies ist die Prozessoreinheit 400 über eine vierte Interaktionslinie 615 mit dem vierten Ein-/Ausgangs-Port P3 verbunden. Über den vierten Ein-/Ausgangs-Port P3 steht der dritte Netzwerkverteiler 180 mithilfe der zehnten Datenleitung 250 mit dem siebten Protokollteilnehmer 150 in Verbindung.

Der dritte Netzwerkverteiler 180 kann weitere Komponenten aufweisen, die in Figur 2 nicht dargestellt sind, wie beispielsweise eine Routingeinheit, die das Routing der Telegramme, die auch als Protokolltelegramme ausgebildet sein können, übernimmt. Die Routingeinheit kann dazu auf die Routingtabelle in der Speichereinheit 405 zugreifen. Die Prozessoreinheit 400 kann zudem eine separate Verarbeitungseinheit umfassen, zur Verarbeitung der Protokolltelegramme im Durchlauf, sofern der dritte Netzwerkverteiler 180 für den ersten Ein-/Ausgangs-Port P0 und für den zweiten Ein-/Ausgangs-Port P1 als Slave-Protokollteilnehmer 110 ausgelegt ist. Die genannten Eigenschaften gelten für den ersten Netzwerkverteiler 160 und den zweiten Netzwerkverteiler 170 ebenfalls.

Der dritte Netzwerkteilnehmer 315 kann beispielsweise eine Verbindung zum Internet aufweisen und dadurch eine potentielle Gefahr für externe Hackerangriffe auf das Automatisierungsnetzwerk 100 darstellen. Auch ist denkbar, dass der dritte Netzwerkteilnehmer 315 mit einer Leitebene verbunden ist, wobei eine Leitebene eine zentrale Überwachungsebene bezeichnet, die die einzelnen Maschinen oder Anlagen samt deren jeweiligen lokalen Steuerungen umfasst. Denn die lokalen Maschinensteuerungen können über ein weiteres Ethernet Netzwerk mit der Leitebene oder dem Internet verbunden sein. Die genannten Eigenschaften gelten für den ersten Netzwerkteilnehmer 305 sowie den zweiten Netzwerkteilnehmer 310 gleichermaßen. Der dritte Netzwerkteilnehmer 315 kann zum Beispiel ein Protokolltelegramm erzeugen, das als EtherCAT Telegramm ausgebildet ist und über die neunte Datenleitung 245 an den dritten Ein-/Ausgangs-Port P2 des dritten Netzwerkverteilers 180 senden. Als Absenderadresse kann das EtherCAT Protokolltelegramm zum Beispiel die erste Absenderadresse MAC1, in Form einer MAC-Adresse aufweisen, also die Adresse des Absenders, des dritten Netzwerkteilnehmers 315. Als Zieladresse kann das EtherCAT Protokolltelegramm zum Beispiel die erste Segmentadresse a in Figur 1 aufweisen, mit der der sechste Protokollteilnehmer 145 angesprochen werden soll. In der Routingtabelle in der Speichereinheit 405 ist dann hinterlegt, dass die Prozessoreinheit 400 ein Protokolltelegramm mit der Zieladresse, der ersten Segmentadresse a, über den zweiten Ein-/Ausgangs-Port P1 über die elfte Datenleitung 255 an den sechsten Protokollteilnehmer 145 ausgibt.

Die Prozessoreinheit 400 des dritten Netzwerkverteilers 180 ist zunächst ausgelegt, die Vorbedingung unter der das Prüfen und Verwerfen des Telegramms gestellt ist, zu berücksichtigen, indem die Prozessoreinheit 400 eine zum Beispiel in der Speichereinheit 405 des dritten Netzwerkverteilers 180 hinterlegte, vorgegebene Adresse mit der Adresse des EtherCAT Protokolltelegramms vergleicht, wobei sowohl die vorgegebene Adresse als auch die Adresse des EtherCAT Protokolltelegramms jeweils als Absenderadressen ausgebildet sein können. Insbesondere kann die vorgegebene Adresse in Form einer Absenderadresse dazu vorgesehen sein, einen vertrauenswürdigen Absender in der Speichereinheit 405 des dritten Netzwerkverteilers 180 zu kennzeichnen. Beispielsweise ist die erste Absenderadresse MAC1, also die Adresse des dritten Netzwerkteilnehmers 315 als Absender des EtherCAT Protokolltelegramms nicht in der Speichereinheit 405 als vorgegebene Adresse hinterlegt. Somit kann die Vorbedingung unter die das Prüfen und Verwerfen eines Protokolltelegramms gestellt ist, nicht erfüllt sein, da es keine Übereinstimmung der vorgegebenen Adresse und der Adresse des EtherCAT Protokolltelegramms gibt. Die Prozessoreinheit 400 würde das EtherCAT Protokolltelegramm, das der dritte Netzwerkverteiler 180 über den dritten Ein-/Ausgangs-Port P2 von dem dritten Netzwerkteilnehmer 315 empfangen hat, bei Erfüllung der Vorbedingung beispielsweise von dem Vorgang des Verwerfens ausnehmen.

Demnach ist die Prozessoreinheit 400 des Netzwerkverteilers 115 weiterhin ausgelegt, mithilfe der Portkennung in der Speichereinheit 405 des dritten Netzwerkverteilers 180 zu prüfen, ob der über den dritten Ein-/Ausgangs-Port P2 des dritten Netzwerkverteilers 180 angeschlossene dritte Netzwerkteilnehmer 315, von dem das Protokolltelegramm entstammt, als Protokollteilnehmer 101 ausgebildet ist. Da der dritte Netzwerkteilnehmer 315 nicht als Protokollteilnehmer 101 ausgebildet ist, ist in der Speichereinheit 405 keine Portkennung für den dritten Ein-/Ausgangs-Port P2 hinterlegt.

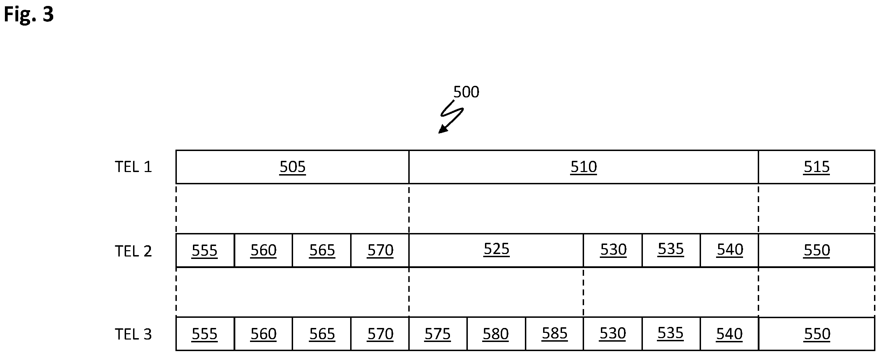

Zusätzlich prüft die Protokolleinheit 400, ob das über den dritten Ein-/Ausgangs-Port P2 empfangene Protokolltelegramm eine Telegrammkennung aufweist. Die Telegrammkennung kann eine erste Kennung und eine zweite Kennung umfassen. Die erste Kennung der Telegrammkennung kann sich in einem Protokollfeld 570 (siehe Fig. 3) in einem Ethernet-Kopfabschnitt 505 des Protokolltelegramms befinden und als Ethertypewert 0x88A4 im Hexadezimalsystem für das echtzeitfähige EtherCAT Protokoll ausgebildet sein. Die zweite Kennung der Telegrammkennung kann sich in einem Typfeld 585 in einem Feldbusprotokoll-Kopfabschnitt 525 innerhalb eines Ethernet-Datenabschnitts 510 befinden und beispielsweise als EtherCAT Protokolltyp mit dem Wert 0x1 im Hexadezimalsystem ausgebildet sein, wobei der Feldbusprotokoll-Kopfabschnitt 525 dann in Form eines EtherCAT Kopfabschnitts ausgebildet ist. Der EtherCAT Protokolltyp mit dem Wert 0x1 gibt der Verarbeitungseinheit des Protokollteilnehmers 110 eine Freigabe zur Verarbeitung des Protokolltelegramms im Durchlauf an. Alternativ dazu kann die Telegrammkennung nur die erste Kennung im Ethernet-Kopfabschnitt 505 aufweisen. Alternativ kann der Feldbusprotokoll-Kopfabschnitt 525 auch in Form eines vom EtherCAT Kopfabschnitt abweichenden Kopfabschnitts ausgebildet sein, wenn den Protokolltelegrammen ein anderes Feldbusprotokoll zugrundeliegt. Dann kann die zweite Kennung der Telegrammkennung in Form eines anderen Typwerts und/oder eines anderen Typfelds und die erste Kennung der Telegrammkennung in Form eines anderen Ethertypewerts im Protokollfeld 570 ausgebildet sein.

Das vom dritten Netzwerkteilnehmer 315 gesendete Protokolltelegramm weist beispielsweise die erste Kennung der Telegrammkennung im Ethernet-Kopfabschnitt 505 und die zweite Kennung der Telegrammkennung im EtherCAT-Kopfabschnitt 525 auf, sodass die Prozessoreinheit 400 die erste Kennung der Telegrammkennung und die zweite Kennung der Telegrammkennung auswerten kann und anhand der Auswertung das Protokolltelegramm als solches als EtherCAT Protokolltelegramm erkennen kann. Da die Adresse des dritten Netzwerkteilnehmers 315 als Absender nicht als vorgegebene Adresse in der Speichereinheit 405 hinterlegt ist und der dritte Netzwerkteilnehmer 315 nicht als Protokollteilnehmer 101 ausgebildet ist, da keine Portkennung in der Speichereinheit 405 des dritten Netzwerkverteilers 180 hinterlegt ist, sowie das Telegramm als EtherCAT Protokolltelegramm durch die Prozessoreinheit 400 des dritten Netzwerkverteilers 180 anhand der ersten und zweiten Kennung der Telegrammkennung identifiziert werden konnte, ist die Prozessoreinheit 400 ausgelegt, das EtherCAT Protokolltelegramm, das über den dritten Ein-/Ausgangs-Port P2 des dritten Netzwerkverteilers 180 empfangen wurde, zu verwerfen.

In der Konfigurationsphase des Automatisierungsnetzwerks 100 kann der Masterteilnehmer 105 die Prozessoreinheit 400 des dritten Netzwerkverteilers 180 zum Prüfen und gegebenenfalls Verwerfen von Protokolltelegrammen, die über den dritten Ein-/Ausgangs-Port P2 von keinem Protokollteilnehmer 101 empfangen werden, einstellen. Zusätzlich kann der Masterteilnehmer 105 zum Beispiel in der in der Figur 1 und Figur 2 nicht dargestellten Speichereinheit des ersten Netzwerkverteilers 160 als vorgegebene Adresse die zweite Absenderadresse MAC2 des ersten Netzwerkteilnehmers 305 hinterlegen, um den ersten Netzwerkteilnehmer 305 als vertrauenswürdigen Netzwerkteilnehmer 300 einzustufen. Die zweite Absenderadresse MAC2 kann ähnlich zur ersten Absenderadresse MAC1 als MAC-Adresse ausgebildet sein. Weiterhin kann der Masterteilnehmer 105 in der Speichereinheit des ersten Netzwerkverteilers 160 die zweite Segmentadresse c hinterlegen, mit der der erste Netzwerkverteiler 160 über den vierten Ein-/Ausgangs-Port P3 und die zweite Datenleitung 210 den ersten Protokollteilnehmer 120 ansprechen kann.

Ein Protokolltelegramm mit der zweiten Segmentadresse c als Zieladresse und der vorgegebenen Adresse, der zweiten Absenderadresse des ersten Netzwerkteilnehmers 305, das der erste Netzwerkverteiler 160 über den achten Ein-/Ausgangs-Port P7 empfängt, wird von der Prozessoreinheit 400 nach der oben genannten Prüfung auf das Vorliegen bzw. die Erfüllung der Vorbedingung nicht verworfen, da die Vorbedingung bei der Übereinstimmung der Adresse des EtherCAT Protokolltelegramms, der zweiten Absenderadresse MAC2 und der vorgegebenen Absenderadresse, der zweiten Absenderadresse MAC2, erfüllt ist. Demnach weiß die Prozessoreinheit, dass die Verbindung zwischen dem ersten Netzwerkteilnehmer 305 und dem ersten Protokollteilnehmer 120 als vertrauenswürdig von dem Masterteilnehmer 105 eingestuft worden ist. Daher gibt die Prozessoreinheit das EtherCAT Protokolltelegramm über den in der Routingtabelle in der Speichereinheit des ersten Netzwerkverteilers 160 hinterlegten vierten Ein-/Ausgangs-Port P3 über die zweite Datenleitung 210 an den ersten Protokollteilnehmer 120 aus. Die weiteren Prüfungen auf das Vorhandensein der Portkennung, auf das Vorhandensein der ersten Kennung der Telegrammkennung oder der ersten Kennung der Telegrammkennung und der zweiten Kennung der Telegrammkennung brauchen in dem Zusammenhang zum Beispiel nicht von der Prozessoreinheit des ersten Netzwerkverteilers 160 ausgeführt zu werden. Es ist alternativ denkbar, dass die weiteren Prüfungen trotzdem durchgeführt werden.

Die oben genannten Prüfungen im Zusammenhang mit dem erläuterten Beispiel in Bezug auf den dritten Netzwerkverteiler 180, auf das Vorhandensein der Portkennung in der Speichereinheit 405 des dritten Netzwerkverteilers 180 und das Aufweisen der Telegrammkennung für das Protokolltelegramm des dritten Netzwerkteilnehmers 315 durch die Prozessoreinheit 400 können in der Reihenfolge auch variiert werden. Zum Beispiel kann die Prozessoreinheit 400 in einem ersten Verfahrensschritt die Vorbedingung prüfen, unter der das Prüfen und Verwerfen eines Protokolltelegramms gestellt ist. Also wie oben beschrieben, ob die Adresse, das heißt die erste Absenderadresse MAC1 mit der vorgegebenen Adresse, der vorgegebenen Absenderadresse übereinstimmt. In einem zweiten Verfahrensschritt kann die Prozessoreinheit 400 des dritten Netzwerkverteilers 180 ausgelegt sein zu prüfen, ob eine Portkennung für den dritten Ein-/Ausgangs-Port P2 des dritten Netzwerkverteilers 180 für das Protokolltelegramm des dritten Netzwerkteilnehmers 315 hinterlegt ist. In einem dritten Verfahrensschritt kann die Prozessoreinheit 400 weiterhin prüfen, ob das Protokolltelegramm eine Telegrammkennung aufweist, und das Protokolltelegramm als solches über die vorhandene Telegrammkennung identifizieren. Ferner kann die Prozessoreinheit 400 auch ausgelegt sein, die Verfahrensschritte in umgekehrter Reihenfolge auszuführen, also erst zu prüfen, ob das Protokolltelegramm die Telegrammkennung aufweist und dann zu prüfen, ob eine Portkennung für den dritten Ein-/Ausgangs-Port P2 des dritten Netzwerkverteilers 180 hinterlegt ist. Sinnvoll ist jedoch den ersten Verfahrensschritt als solchen weiterhin als ersten Verfahrensschritt beizubehalten.

Die erläuterten Beispiele schränken die Erfindung nicht auf das Blockieren eines EtherCAT Protokolltelegramms über den dritten Ein-/Ausgangs-Port P2 des dritten Netzwerkverteilers 180 von dem dritten Netzwerkteilnehmer 315 oder das Weiterleiten eines EtherCAT Protokolltelegramms über den achten Ein-/Ausgangs-Port P7 des ersten Netzwerkverteilers 160 von dem ersten Netzwerkteilnehmer 305 ein. Sie wurden lediglich exemplarisch zur Erläuterung des Verfahrens und der Funktionsweise der Netzwerkverteiler 115 gewählt.

Zum Beispiel kann der Masterteilnehmer 105 neben der Blockierung von Protokolltelegrammen, die über den dritten Ein-/Ausgangs-Port P2 des dritten Netzwerkverteilers 180 von keinem Protokollteilnehmer 101 empfangen werden, auch ähnlich für den dritten Ein-/Ausgangs-Port P2, den sechsten Ein-/Ausgangs-Port P5 und den siebten Ein-/Ausgangs-Port P6 des ersten Netzwerkverteilers 160 verfahren und die genannten Ein-/Ausgangs-Ports für den Empfang von Protokolltelegrammen von unbekannten Netzwerkteilnehmern 300, die nicht als Protokollteilnehmer 101 ausgelegt sind, blockieren. Wäre der erste Netzwerkteilnehmer 305, der über den achten Ein-/Ausgangs-Port P7 des ersten Netzwerkverteilers 160 angeschlossen ist, nicht als vertrauenswürdig eingestuft worden für die Ausgabe von EtherCAT Protokolltelegrammen, so könnte der Masterteilnehmer 105 auch in ähnlicher Weise zum Blockieren der oben genannten Ein-/Ausgangs-Ports PX des ersten Netzwerkverteilers 160 verfahren.

Damit der dritte Netzwerkteilnehmer 315 sowie der erste Netzwerkteilnehmer 305 und der zweite Netzwerkteilnehmer 310 zum Beispiel über das den Telegrammen zugrundeliegende OPC-UA Protokoll aus der Leitebene oder dem Internet mit dem Masterteilnehmer 105 und den Protokollteilnehmern 110 kommunizieren kann, um eine Diagnose durchführen zu können oder Daten in einer Cloud zu speichern, muss der Masterteilnehmer 105 in den Routingtabellen der Netzwerkverteiler 115 die einzelnen Kommunikationsverbindungen hinterlegen. Zum Beispiel, dass der erste Netzwerkverteiler 160 ein Telegramm mit dem OPC-UA Protokoll von dem ersten Netzwerkteilnehmer 305 über den ersten Ein-/Ausgangs-Port P0 über die erste Datenleitung 205 an den Masterteilnehmer 105 ausgibt oder ein Telegramm mit dem OPC-UA Protokoll über den vierten Ein-/Ausgangs-Port P3 und die zweite Datenleitung 210 an den ersten Protokollteilnehmer 120, etc. Zum Beispiel auch, dass der dritte Netzwerkverteiler 180 ausgelegt ist, ein Telegramm mit dem OPC-UA Protokoll von dem dritten Netzwerkteilnehmer 315, das der dritte Netzwerkverteiler 180 über den dritten Ein-/Ausgangs-Port P2 empfängt, über den ersten Ein-/Ausgangs-Port P0 des dritten Netzwerkverteilers 180 und über die achte Datenleitung 240 über den fünften Protokollteilnehmer 140 an den dritten Ein-/Ausgangs-Port P2 des zweiten Netzwerkverteilers 170 auszugeben. Der zweite Netzwerkverteiler 170 ist ausgelegt, das Telegramm mit dem OPC-UA Protokoll von dem dritten Netzwerkteilnehmer 315 über den dritten Ein-/Ausgangs-Port P2 zu empfangen und über den ersten Ein-/Ausgangs-Port P0 über die sechste Datenleitung 230 über den dritten Protokollteilnehmer 130 an den ersten Netzwerkverteiler 160 zu senden, und weiterhin, dass der erste Netzwerkverteiler 160, also dessen Prozessoreinheit 400 ausgelegt ist, das Telegramm über den ersten Ein-/Ausgangs-Port P0 an den Masterteilnehmer 105 zu senden. Auf die Erläuterung der einzelnen Zieladressen und Absenderadressen der Telegramme im Zusammenhang mit den Ein-/Ausgangs-Ports PX wird an der Stelle verzichtet.

Figur 3 zeigt einen schematischen Aufbau einer Datenstruktur 500, die zu einer Verwendung in dem Verfahren zur Datenübertragung in dem in Figur 1 dargestellten Automatisierungsnetzwerk 100 dient. Die Datenstruktur 500 kann als Protokolltelegramm ausgebildet sein und eine Länge von 64 bis 1518 Byte umfassen bzw. bei einem vorhandenem TAG-Feld 64 bis 1522 Byte, sofern das Protokolltelegramm als Ethernet Telegramm ausgebildet ist. Die Datenstruktur 500 in Figur 3 weist einen ersten Telegrammaufbau TEL1 auf und umfasst einen Ethernet-Kopfabschnitt 505, einen Ethernet-Datenabschnitt 510 sowie einen Ethernet-Endabschnitt 515. Beispielsweise kann die Datenstruktur 500 nach der IEEE-Norm 802.3 ausgebildet sein und das Ethernet Datenframe Format für eine paketorientierte Übertragung der Daten umfassen. Ist die Datenstruktur 500 zusätzlich zur Einhaltung des Ethernet Datenframe Aufbaus für das echtzeitfähige EtherCAT Protokoll ausgelegt, so weist die Datenstruktur 500 einen zweiten Telegrammaufbau TEL2 auf. Vorzugsweise sind die vom Masterteilnehmer 105 ausgegebenen Protokolltelegramme sowie die vom ersten Netzwerkteilnehmer 305, vom zweiten Netzwerkteilnehmer 310 und/oder vom dritten Netzwerkteilnehmer 315 ausgegebenen Protokolltelegramme als EtherCAT Telegramme ausgebildet und können damit in der Grundstruktur den zweiten Telegrammaufbau TEL2 aufweisen. Werden andere Feldbusprotokolle in dem Automatisierungsnetzwerk 100 für den Telegrammverkehr im Steuerungsbetrieb genutzt, so kann der Telegrammaufbau ähnlich zum zweiten Telegrammaufbau TEL2 und/oder ähnlich zum ersten Telegrammaufbau TEL1 ausgebildet sein.

Der Ethernet-Kopfabschnitt 505 weist ein Zieladressfeld 555 auf, welches eine Zieladresse umfasst, die den Netzwerkteilnehmer 300 in Figur 1 identifiziert, der das EtherCAT Telegramm empfangen soll (sogenannte Unicast-Adresse). Die Zieladresse kann dabei auch als Multicast-Adresse (Adressierung mehrerer Netzwerkteilnehmer 300 im Automatisierungsnetzwerk 100) oder Broadcast-Adresse (Adressierung aller Netzwerkteilnehmer 300 im Automatisierungsnetzwerk 100) ausgebildet sein. Die Zieladresse kann als MAC-Adresse ausgebildet sein. Ist die Zieladresse als VLAN-ID oder als Segmentadresse für ein EtherCAT Segment verwirklicht, so kann ein TAG-Feld 565 die als VLAN-ID oder als Segmentadresse umgesetzte Zieladresse aufweisen. Nachfolgend auf das Zieladressfeld 555 weist der Ethernet-Kopfabschnitt 505 ein Absenderadressfeld 560 auf. Das Absenderadressfeld 560 umfasst eine Absenderadresse, die als MAC-Adresse ausgebildet sein kann und den Sender identifiziert. Insbesondere kann die Absenderadresse die Adresse sein, mit der die Prozessoreinheit 400 in Figur 2 einen Abgleich mit der in der Speichereinheit 405 hinterlegten vorgegebenen Adresse, die dann ebenfalls als Absenderadresse ausgebildet ist, durchführt um das Vorliegen bzw. die Erfüllung der Vorbedingung unter der das Prüfen und Verwerfen des Protokolltelegramms gestellt ist, geprüft wird. Das Zieladressfeld 555 und das Absenderadressfeld 560 umfassen dabei jeweils 6 Byte.

Ferner weist der Ethernet-Kopfabschnitt 505 auf das Absenderadressfeld 560 folgend das TAG-Feld 565 auf. Dieses kann beispielsweise gemäß der IEEE 802.1Q Norm als VLAN TAG TAG-Feld ausgebildet sein (VLAN: Virtual Local Area Network) und 4 Byte umfassen. Das TAG-Feld 565 kann auch als ROUT TAG TAG-Feld ausgebildet sein, wenn die Zieladresse als Segmentadresse im TAG-Feld 565 untergebracht ist. Auf das TAG-Feld 565 folgend weist der Ethernet-Kopfabschnitt 505 das oben genannte Protokollfeld 570 auf. Das Protokollfeld 570 kann als sogenanntes "Ethertype"-Feld ausgebildet sein, 2 Byte aufweisen und einen Ethertypewert umfassen, der ein verwendetes Protokoll der nächsthöheren Schicht innerhalb von Nutzdaten, also innerhalb des Ethernet-Datenabschnitts 510 angibt. Eine Schicht und die nächsthöhere Schicht sind nach dem OSI-Modell (OSI: Open Systems Interconnection), also dem Referenzmodell für Protokolle in einer Schichtenarchitektur, definiert. Beispielsweise weist das Protokollfeld 570 den Ethertypewert 0x88A4 (im Hexadezimalsystem) auf, wenn das Protokolltelegramm als EtherCAT Telegramm ausgebildet ist, da dieser Wert mit dem echtzeitfähigen EtherCAT Protokoll verknüpft ist. Das Ethertype-Feld, also das Protokollfeld 570, weist die erste Kennung der Telegrammkennung auf, wenn das Telegramm als Protokolltelegramm ausgebildet ist. Speziell wenn das Protokolltelegramm als EtherCAT Telegramm ausgebildet ist, weist das Protokollfeld den Ethertypewert 0x88A4 im Hexadezimalsystem auf. Die Prozessoreinheit 400 kann das EtherCAT Protokolltelegramm anhand des Ethertypewerts als Protokolltelegramm erkennen.

Im zweiten Telegrammaufbau TEL2 weist der Ethernet-Datenabschnitt 510 der Datenstruktur 500 einen weiteren Kopfabschnitt auf. Der weitere Kopfabschnitt ist hierbei als ein Feldbusprotokoll-Kopfabschnitt 525 ausgebildet, der Instruktionen für die Protokollteilnehmer im Automatisierungsnetzwerk 100 umfasst. Vorzugsweise ist der Feldbusprotokoll-Kopfabschnitt 525 als EtherCAT-Kopfabschnitt ausgebildet. Weiterhin umfasst der Ethernet-Datenabschnitt 510 EtherCAT Daten, die in Form von Datagrammen umgesetzt sein können. Beispielsweise kann der Ethernet-Datenabschnitt 510 ein erstes Datagramm 530, ein zweites Datagramm 535 sowie ein n-tes Datagramm 540 aufweisen, wobei das n-te Datagramm 540 anzeigt, dass die Datenstruktur 500 insgesamt eine beliebige Anzahl an Datagrammen umfassen kann. An dieser Stelle soll jedoch keine Einschränkung auf eine bestimmte Anzahl an Datagrammen in der Datenstruktur 500 vorgenommen werden.

Der Ethernet-Endabschnitt 515 weist überdies im zweiten Telegrammaufbau TEL2 ein Prüfsummenfeld 550 auf. Weiterhin kann der Ethernet-Endabschnitt 515 ein nicht dargestelltes Padding-Feld aufweisen. Das Padding-Feld ist erforderlich, um das EtherCAT Telegramm in dem Ethernet Datenframe auf die notwendige Minimalgröße des Ethernet Datenframes von 64 Byte zu bringen, indem zusätzliche, als Pad angefügte Byte in das EtherCAT Telegramm eingefügt werden. Das Padding-Feld kann erforderlich sein, wenn mit dem EtherCAT Telegramm als Nutzdaten beispielsweise weniger als 46 bzw. 42 Byte (ohne bzw. mit einem der IEEE 802.1Q Norm entsprechenden VLAN TAG) zu übertragen sind, wobei eine Präambel und ein Start Frame Delimiter (SFD) Feld, die in Figur 3 nicht enthalten sind, dabei nicht mitgezählt werden. Mithilfe des Prüfsummenfelds 550 kann eine Integritätsprüfung von versendeten Daten gewährleistet werden. Das Prüfsummenfeld 550 kann dazu beispielsweise eine berechnete CRC-Prüfsumme (CRC: Cyclic Redundancy Check) umfassen, die über den Ethernet Datenframe, die Datenstruktur 500, berechnet wird, beginnend mit einer Zieladresse und endend mit dem Padding-Feld, sodass die Prüfsumme selbst nicht in der CRC-Prüfsumme enthalten ist. Die CRC-Prüfsumme wird vom Sender erstellt und an das Padding-Feld angehängt. Der Empfänger führt nach dem Empfang des EtherCAT Telegramms die gleiche CRC-Prüfsummenberechnung aus, und wenn die vom Empfänger berechnete CRC-Prüfsumme nicht mit der mit dem EtherCAT Protokolltelegramm übermittelten CRC-Prüfsumme übereinstimmt, so geht der Empfänger von einer fehlerhaften Datenübertragung aus. Das EtherCAT Protokolltelegramm kann in einem solchen Fall vom Empfänger verworfen werden.

In einem dritten Telegrammaufbau TEL3 der Datenstruktur 500 umfasst der weitere Kopfabschnitt, der als Feldbusprotokoll-Kopfabschnitt 525 und vorzugsweise als EtherCAT-Kopfabschnitt ausgebildet ist, bei der Ausbildung als EtherCAT-Kopfabschnitt ein Längenfeld 575 auf. Das Längenfeld 575 gibt Auskunft über die Länge der Datagramme im Ethernet-Datenabschnitt 510. Das Längenfeld 575 umfasst 11 Bit. Nachfolgend auf das Längenfeld 575 umfasst der als EtherCAT-Kopfabschnitt ausgebildete Feldbusprotokoll-Kopfabschnitt 525 ein Reservefeld 580 mit 1 Bit. Standardmäßig ist das Reservefeld nicht genutzt. Anschließend an das Reservefeld 580 umfasst der als EtherCAT-Kopfabschnitt ausgebildete Feldbusprotokoll-Kopfabschnitt 525 ein Typfeld 585 mit 4 Bit. Das Typfeld 585 kann die zweite Kennung der Telegrammkennung aufweisen. Die zweite Kennung der Telegrammkennung kann als EtherCAT Protokolltyp ausgebildet sein. Für den EtherCAT Protokolltyp stehen 16 verschiedene Werte zur Darstellung bereit, also die Werte von Null bis 15, von denen der Wert 0x1 im Hexadezimalsystem als zweite Kennung der Telegrammkennung dienen kann, für die Anzeige der Verarbeitung eines EtherCAT Protokolltelegramms für die Verarbeitungseinheit eines Protokollteilnehmers 110. Es ist denkbar, dass die Prozessoreinheit 400 ein EtherCAT Protokolltelegramm entweder über die erste Kennung der Telegrammkennung, also den Ethertypewert im Hexadezimalsystem für das EtherCAT Protokoll im Protokollfeld 570 oder über die erste Kennung der Telegrammkennung im Protokollfeld 570 und die zweite Kennung der Telegrammkennung im Typfeld 585, also des EtherCAT Protokolltyps mit dem Wert 0x1 im Hexadezimalsystem erkennt.

Darüber hinaus kann das EtherCAT Protokolltelegramm auch in einen UDP/IP (UDP: U-ser Datagram Protocol, IP: Internet Protocol) Datenframe Aufbau eingebettet sein, was in Figur 3 jedoch nicht dargestellt ist. In dem Fall weist der Ethernet-Kopfabschnitt 505 das Zieladressfeld 555 sowie das Absenderadressfeld 560 auf. Nachfolgend auf das Absenderadressfeld 560 umfasst der Ethernet-Kopfabschnitt 505 das Protokollfeld 570, wobei das Protokollfeld 570 den Wert 0x0800 (im Hexadezimalsystem) aufweist, der das Internetprotokoll (IPv4, Internet Protocol Version 4) angibt. Auf das Protokollfeld 570 folgen im Ethernet-Kopfabschnitt 505 ein IP Kopfabschnitt sowie ein UDP Kopfabschnitt. Der als EtherCAT-Kopfabschnitt ausgebildete Feldbusprotokoll-Kopfabschnitt 525, die Datagramme und der Ethernet-Endabschnitt 515 können in dem Fall ähnlich zur obigen Erläuterung ausgebildet sein, wobei der Ethernet-Endabschnitt 515 das Prüfsummenfeld 550 und ggf. das Padding-Feld umfassen kann. Des Weiteren kann das EtherCAT Protokolltelegramm zusätzlich zur Einbettung in den UDP/IP Datenframe Aufbau noch das TAG-Feld 565 aufweisen, wobei das TAG-Feld 565 hierbei als VLAN TAG ausgebildet sein kann. Das TAG-Feld 565 ist dann ähnlich zum zweiten Telegrammaufbau TEL2 oder ähnlich zum dritten Telegrammaufbau TEL3 angeordnet. Auch ist denkbar, dass das EtherCAT Protokolltelegramm statt dem VLAN TAG das oben genannte ROUT TAG aufweist. Demnach kann die Prozessoreinheit 400 auch vom Masterteilnehmer 105 eingestellt werden, dass die Prozessoreinheit 400 das EtherCAT Protokolltelegramm bei der Einbettung in einen UDP/IP Datenframe Aufbau über den Ethertypewert 0x0800 als erste Kennung der Telegrammkennung erkennt.

Die Erfindung ist nicht auf das echtzeitfähige EtherCAT Protokoll beschränkt, sondern lässt sich auch auf andere Protokolle in der Leitebene, also der Ebene der zentralen Maschinensteuerung, sowie der Feldebene, der Ebene, auf der die Steuerung der Prozesse direkt durch die Sensoren und Aktoren ausgeführt wird, anwenden.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne dabei den Schutzumfang der Erfindung gemäß den beigefügten Ansprüchen zu verlassen.

### Bezugszeichenliste

- 100: Automatisierungsnetzwerk

- 300: Netzwerkteilnehmer

- 101: Protokollteilnehmer

- 105: Masterteilnehmer
- 110: Slave-Protokollteilnehmer
- 115: Netzwerkverteiler
- PX: Ein-/Ausgangs-Ports

- 120: erster Protokollteilnehmer
- 125: zweiter Protokollteilnehmer
- 130: dritter Protokollteilnehmer
- 135: vierter Protokollteilnehmer
- 140: fünfter Protokollteilnehmer
- 145: sechster Protokollteilnehmer
- 150: siebter Protokollteilnehmer

- 160: erster Netzwerkverteiler
- 170: zweiter Netzwerkverteiler
- 180: dritter Netzwerkverteiler

- 200: Datenleitungsnetz
- 205: erste Datenleitung
- 210: zweite Datenleitung
- 215: dritte Datenleitung
- 220: vierte Datenleitung
- 225: fünfte Datenleitung
- 230: sechste Datenleitung
- 235: siebte Datenleitung
- 240: achte Datenleitung
- 245: neunte Datenleitung
- 250: zehnte Datenleitung
- 255: elfte Datenleitung

- 305: erster Netzwerkteilnehmer
- 310: zweiter Netzwerkteilnehmer
- 315: dritter Netzwerkteilnehmer

- P0: erster Ein-/Ausgangs-Port
- P1: zweiter Ein-/Ausgangs-Port
- P2: dritter Ein-/Ausgangs-Port
- P3: vierter Ein-/Ausgangs-Port
- P4: fünfter Ein-/Ausgangs-Port
- P5: sechster Ein-/Ausgangs-Port
- P6: siebter Ein-/Ausgangs-Port
- P7: achter Ein-/Ausgangs-Port

- 400: Prozessoreinheit
- 405: Speichereinheit

- a: erste Segmentadresse
- MAC1: erste Absenderadresse
- c: zweite Segmentadresse
- MAC2: zweite Absenderadresse

- 600: erste Interaktionslinie
- 605: zweite Interaktionslinie
- 610: dritte Interaktionslinie
- 615: vierte Interaktionslinie

- 500: Datenstruktur
- 505: Ethernet-Kopfabschnitt
- 510: Ethernet-Datenabschnitt
- 515: Ethernet-Endabschnitt
- 525: EtherCAT-Kopfabschnitt
- 530: erstes Datagramm
- 535: zweites Datagramm
- 540: n-tes Datagramm
- 550: Prüfsummenfeld
- 555: Zieladressfeld
- 560: Absenderadressfeld
- 565: TAG-Feld
- 570: Protokollfeld
- 575: Längenfeld
- 580: Reservefeld
- 585: Typfeld

- TEL1: erster Telegrammaufbau
- TEL2: zweiter Telegrammaufbau
- TEL3: dritter Telegrammaufbau

## Patentansprüche

1. Netzwerkverteiler (115), der mehrere Ein-/Ausgangs-Ports (PX), eine Prozessoreinheit (400) und eine Speichereinheit (405) aufweist,
wobei die mehreren Ein-/Ausgangs-Ports (PX) ausgelegt sind, jeweils Netzwerkteilnehmer (300) über ein Datenleitungsnetz (200) anzuschließen, wobei die Netzwerkteilnehmer (300) Protokollteilnehmer (101) umfassen, die ausgelegt sind, Telegramme, die als Protokolltelegramme ausgebildet sind, zu verarbeiten,
wobei die Prozessoreinheit (400) ausgelegt ist, Telegramme über einen Ein-/Ausgangs-Port (PX) zu empfangen und über einen weiteren Ein-/Ausgangs-Port (PX) auszugeben, der in einer Routingtabelle in der Speichereinheit (405) hinterlegt ist,
**dadurch gekennzeichnet, dass** die Prozessoreinheit (400) weiterhin ausgelegt ist, ein Telegramm daraufhin zu prüfen, ob das Telegramm ein Protokolltelegramm ist und über einen Ein-/Ausgangs-Port (PX), für den voreingestellt ist, dass kein Protokollteilnehmer (101) angeschlossen ist, empfangen worden ist,
wobei die Prozessoreinheit (400) dazu ausgelegt ist, zu prüfen, ob das über den Ein-/Ausgangs-Port (PX) empfangene Telegramm eine Telegrammkennung aufweist, die eine erste Kennung oder eine erste Kennung und eine zweite Kennung umfasst,
wobei die Prozessoreinheit (400) ausgelegt ist, das Telegramm auf der Grundlage der Telegrammkennung, umfassend die erste Kennung oder die erste Kennung und die zweite Kennung als Protokolltelegramm zu erkennen, und das Telegramm bei positiver Prüfung zu verwerfen, und
wobei das Prüfen und Verwerfen des Telegramms unter eine von der Prozessoreinheit (400) zu berücksichtigende Vorbedingung gestellt ist,
wobei die Erfüllung der Vorbedingung zu einer Ausnahme vom Verwerfen des Telegramms führt.

2. Netzwerkverteiler (115) nach Anspruch 1,
wobei die Prozessoreinheit (400) ausgelegt ist, mithilfe einer Portkennung in der Speichereinheit (405) zu prüfen, ob der über den Ein-/Ausgangs-Port (PX) des Netzwerkverteilers (115) angeschlossene Netzwerkteilnehmer (300), der das Telegramm versendet hat, als Protokollteilnehmer (101) ausgebildet ist, und
wobei eine Portkennung in der Speichereinheit (405) hinterlegt ist, wenn der über den Ein-/Ausgangs-Port (PX) angeschlossene Netzwerkteilnehmer (300) als Protokollteilnehmer (101) ausgebildet ist.

3. Netzwerkverteiler (115) nach Anspruch 1,
wobei ein als Protokolltelegramm ausgebildetes Telegramm als ein Ethernet Telegramm ausgebildet ist,
wobei das Ethernet Telegramm einen Ethernet-Kopfabschnitt (505) und einen Ethernet-Datenabschnitt (510) aufweist,
wobei die Telegrammkennung die erste Kennung umfasst,
wobei der Ethernet-Kopfabschnitt (505) die erste Kennung der Telegrammkennung umfasst, und
wobei die Prozessoreinheit (400) ausgelegt ist, die erste Kennung der Telegrammkennung im Ethernet-Kopfabschnitt (505) auszuwerten.

4. Netzwerkverteiler (115) nach Anspruch 1,
wobei ein als Protokolltelegramm ausgebildetes Telegramm als ein Ethernet Telegramm ausgebildet ist,
wobei das Ethernet Telegramm einen Ethernet-Kopfabschnitt (505) und einen Ethernet-Datenabschnitt (510) aufweist,
wobei der Ethernet-Datenabschnitt (510) einen Feldbusprotokoll-Kopfabschnitt (525) aufweist,
wobei die Telegrammkennung die erste Kennung und die zweite Kennung umfasst, wobei der Ethernet-Kopfabschnitt (505) die erste Kennung der Telegrammkennung und der Feldbusprotokoll-Kopfabschnitt (525) die zweite Kennung der Telegrammkennung umfasst, und
wobei die Prozessoreinheit (400) ausgelegt ist, die erste Kennung der Telegrammkennung im Ethernet-Kopfabschnitt (505) und die zweite Kennung der Telegrammkennung im Feldbusprotokoll-Kopfabschnitt (525) auszuwerten.

5. Netzwerkverteiler (115) nach einem der Ansprüche 1 bis 4,
wobei die Vorbedingung, unter der ein Prüfen und Verwerfen eines Telegramms gestellt ist, ein Feststellen umfasst, ob die Adresse des Telegramms einer vorgegebenen Adresse entspricht.

6. Automatisierungsnetzwerk (100), das mehrere Netzwerkteilnehmer (300) aufweist, die über ein Datenleitungsnetz (200) miteinander verbunden sind,
wobei Netzwerkteilnehmer (300) als Protokollteilnehmer (101) zur Verarbeitung von Telegrammen, die als Protokolltelegramme ausgebildet sind, ausgelegt sind,
wobei das Automatisierungsnetzwerk (100) wenigstens einen Netzwerkverteiler (115) aufweist, der mehrere Ein-/Ausgangs-Ports (PX), eine Prozessoreinheit (400) und eine Speichereinheit (405) umfasst,
wobei die mehreren Ein-/Ausgangs-Ports (PX) ausgelegt sind, jeweils Netzwerkteilnehmer (300) über das Datenleitungsnetz (200) anzuschließen,
wobei die Prozessoreinheit (400) ausgelegt ist, ein Telegramm über einen Ein-/Ausgangs-Port (PX) zu empfangen und über einen weiteren Ein-/Ausgangs-Port (PX) auszugeben, der in einer Routingtabelle in der Speichereinheit (405) hinterlegt ist,
**dadurch gekennzeichnet, dass** die Prozessoreinheit (400) weiterhin ausgelegt ist, ein Telegramm daraufhin zu prüfen, ob das Telegramm ein Protokolltelegramm ist und über einen Ein-/Ausgangs-Port (PX), für den voreingestellt ist, dass kein Protokollteilnehmer (101) angeschlossen ist, empfangen worden ist, und das Telegramm bei positiver Prüfung zu verwerfen,
wobei das Prüfen und Verwerfen des Telegramms unter eine von der Prozessoreinheit (400) zu berücksichtigende Vorbedingung gestellt ist,
wobei die Erfüllung der Vorbedingung zu einer Ausnahme vom Verwerfen des Telegramms führt, und
wobei das Automatisierungsnetzwerk (100) als Master-Slave-System ausgelegt ist, wobei ein Protokollteilnehmer (101) als der Masterteilnehmer (105) ausgebildet ist, der ausgelegt ist, Telegramme, die als Protokolltelegramme ausgebildet sind, über das Datenleitungsnetz (200) auszugeben,
wobei der Masterteilnehmer (105) weiter ausgebildet ist, in der Prozessoreinheit (400) des Netzwerkverteilers (115) einzustellen, dass an einem Ein-/Ausgangs-Port (PX) des Netzwerkverteilers (115) kein Protokollteilnehmer (101) angeschlossen ist.

7. Automatisierungsnetzwerk (100) nach Anspruch 6,
wobei die Prozessoreinheit (400) ausgelegt ist, mithilfe einer Portkennung in der Speichereinheit (405) zu prüfen, ob der über den Ein-/Ausgangs-Port (PX) des Netzwerkverteilers (115) angeschlossene Netzwerkteilnehmer (300), der das Telegramm versendet hat, als Protokollteilnehmer (101) ausgebildet ist, und
wobei eine Portkennung in der Speichereinheit (405) hinterlegt ist, wenn der über den Ein-/Ausgangs-Port (PX) angeschlossene Netzwerkteilnehmer (300) als Protokollteilnehmer (101) ausgebildet ist.

8. Automatisierungsnetzwerk (100) nach Anspruch 6 oder 7,
wobei die Prozessoreinheit (400) ausgelegt ist, zu prüfen, ob das über den Ein-/Ausgangs-Port (PX) empfangene Telegramm eine Telegrammkennung aufweist, und
wobei die Prozessoreinheit (400) ausgelegt ist, das Telegramm auf der Grundlage der Telegrammkennung als Protokolltelegramm zu erkennen.

9. Automatisierungsnetzwerk (100) nach Anspruch 6,
wobei der Masterteilnehmer (105) ausgelegt ist, eine Netzwerkstruktur der Netzwerkteilnehmer (300) vorzugeben und die vorgegebene Netzwerkstruktur an die Prozessoreinheit (400) des Netzwerkverteilers (115) über das Datenleitungsnetz (200) zu übermitteln, und wobei die Prozessoreinheit (400) ausgelegt ist, die Ein-/Ausgangs-Ports (PX) des Netzwerkverteilers (115), an denen Protokollteilnehmer (101) über das Datenleitungsnetz (200) angeschlossen sind, auf der Grundlage der vorgegebenen Netzwerkstruktur mit der Portkennung in der Speichereinheit (405) zu kennzeichnen.

10. Automatisierungsnetzwerk (100) nach Anspruch 6,
wobei der Masterteilnehmer (105) ausgelegt ist, eine Netzwerkstruktur der Netzwerkteilnehmer (300) mittels Abfragetelegrammen zu erfassen,
wobei, wenn ein Netzwerkteilnehmer (300), der als Protokollteilnehmer (101) ausgebildet ist, ein Abfragetelegramm empfängt, der Protokollteilnehmer (101) ausgelegt ist, eine Protokollteilnehmerinformation in das Abfragetelegramm einzutragen und das Abfragetelegramm an den Masterteilnehmer (105) zurückzusenden, sofern kein nachfolgender Protokollteilnehmer (101) über das Datenleitungsnetz (200) angeschlossen ist, wobei, wenn der Netzwerkverteiler (115) ein Abfragetelegramm über den Ein-/Ausgangs-Port (PX) empfängt, der Netzwerkverteiler (115) ausgelegt ist, eine Portinformation in das Abfragetelegramm einzutragen und das Abfragetelegramm an den Masterteilnehmer (105) zurückzusenden,
wobei der Masterteilnehmer (105) ausgelegt ist, auf der Grundlage der Portinformation weitere Abfragetelegramme an den Netzwerkverteiler (115) auszugeben, die die Prozessoreinheit (400) des Netzwerkverteilers (115) über den dem jeweiligen Abfragetelegramm in der Routingtabelle in der Speichereinheit (405) hinterlegten weiteren Ein-/Ausgangs-Port (PX) an den über das Datenleitungsnetz (200) angeschlossenen Netzwerkteilnehmer (300) weiterleitet,
wobei der Masterteilnehmer (105) ausgelegt ist, auf der Grundlage der Protokollteilnehmerinformation der empfangenen weiteren Abfragetelegramme, der Prozessoreinheit (400) des Netzwerkverteilers (115) zu übermitteln, an welchen der mehreren Ein-/Ausgangs-Ports (PX) des Netzwerkverteilers (115) Protokollteilnehmer (101) über das Datenleitungsnetz (200) angeschlossen sind, und
wobei die Prozessoreinheit (400) ausgelegt ist, die Ein-/Ausgangs-Ports (PX) des Netzwerkverteilers (115), an denen ein Protokollteilnehmer (101) über das Datenleitungsnetz (200) angeschlossen ist, mit der Portkennung in der Speichereinheit (405) zu kennzeichnen.

11. Verfahren zur Datenübertragung in einem Automatisierungsnetzwerk (100), das mehrere Netzwerkteilnehmer (300) und wenigstens einen Netzwerkverteiler (115) aufweist, die über ein Datenleitungsnetz (200) miteinander verbunden sind,
wobei die Netzwerkteilnehmer (300) Protokollteilnehmer (101) umfassen, die ausgelegt sind, Telegramme, die als Protokolltelegramme ausgebildet sind, zu verarbeiten,
wobei der Netzwerkverteiler (115) mehrere Ein-/Ausgangs-Ports (PX), eine Prozessoreinheit (400) und eine Speichereinheit (405) aufweist,
wobei die mehreren Ein-/Ausgangs-Ports (PX) ausgelegt sind, jeweils Netzwerkteilnehmer (300) über das Datenleitungsnetz (200) anzuschließen,
wobei die Prozessoreinheit (400) ein Telegramm über einen Ein-/Ausgangs-Port (PX) empfängt und über einen weiteren Ein-/Ausgangs-Port (PX) ausgibt, der in einer Routingtabelle in der Speichereinheit (405) hinterlegt ist,
**dadurch gekennzeichnet, dass** die Prozessoreinheit (400) ein Telegramm daraufhin prüft, ob das Telegramm ein Protokolltelegramm ist und über einen Ein-/Ausgangs-Port (PX), für den voreingestellt ist, dass kein Protokollteilnehmer (101) angeschlossen ist, empfangen worden ist,
wobei die Prozessoreinheit (400) hierzu prüft, ob das Telegramm eine Telegrammkennung, umfassend eine erste Kennung oder eine erste Kennung und eine zweite Kennung, aufweist, welche das Telegramm als ein Protokolltelegramm kennzeichnet, und das Telegramm bei positiver Prüfung verwirft, und
wobei das Prüfen und Verwerfen des Telegramms unter eine von der Prozessoreinheit (400) zu berücksichtigende Vorbedingung gestellt ist,
wobei die Erfüllung der Vorbedingung zu einer Ausnahme vom Verwerfen des Telegramms führt.

12. Verfahren nach Anspruch 11,
wobei die Prozessoreinheit (400) prüft, ob eine Portkennung für einen über den Ein-/Ausgangs-Port (PX) des Netzwerkverteilers (115) angeschlossenen Protokollteilnehmer (101) in der Speichereinheit (405) hinterlegt ist.

13. Verfahren nach Anspruch 11,
wobei ein als Protokolltelegramm ausgebildetes Telegramm als ein Ethernet Telegramm ausgebildet ist,
wobei das Ethernet Telegramm einen Ethernet-Kopfabschnitt (505) und einen Ethernet-Datenabschnitt (510) aufweist,
wobei die Telegrammkennung die erste Kennung umfasst,
wobei der Ethernet-Kopfabschnitt (505) die erste Kennung der Telegrammkennung umfasst, und
wobei die Prozessoreinheit (400) ausgelegt ist, die erste Kennung der Telegrammkennung im Ethernet-Kopfabschnitt (505) auszuwerten.

14. Verfahren nach Anspruch 11,
wobei ein als Protokolltelegramm ausgebildetes Telegramm als ein Ethernet Telegramm ausgebildet ist,
wobei das Ethernet Telegramm einen Ethernet-Kopfabschnitt (505) und einen Ethernet-Datenabschnitt (510) aufweist,
wobei der Ethernet-Datenabschnitt (510) einen Feldbusprotokoll-Kopfabschnitt (525) aufweist,
wobei die Telegrammkennung die erste Kennung und die zweite Kennung umfasst, wobei der Ethernet-Kopfabschnitt (505) die erste Kennung der Telegrammkennung und der Feldbusprotokoll-Kopfabschnitt (525) die zweite Kennung der Telegrammkennung umfasst, und
wobei die Prozessoreinheit (400) ausgelegt ist, die erste Kennung der Telegrammkennung im Ethernet-Kopfabschnitt (505) und die zweite Kennung der Telegrammkennung im Feldbusprotokoll-Kopfabschnitt (525) auszuwerten.

15. Verfahren nach einem der Ansprüche 11 bis 14,
wobei die Vorbedingung, unter der ein Prüfen und Verwerfen eines Telegramms gestellt ist, ein Feststellen umfasst, ob die Adresse des Telegramms einer vorgegebenen Adresse entspricht.

## Claims

1. Network distributor (115) having multiple input/output ports (PX), a processor unit (400) and a storage unit (405),
wherein the multiple input/output ports (PX) are each designed to connect network subscribers (300) via a data line network (200), the network subscribers (300) comprising protocol subscribers (101) designed to process telegrams that are in the form of protocol telegrams,
wherein the processor unit (400) is designed to receive telegrams via an input/output port (PX) and to output said telegrams via a further input/output port (PX), which is stored in a routing table in the storage unit (405),
**characterized in that** the processor unit (400) is furthermore designed to check a telegram for whether the telegram is a protocol telegram and has been received via an input/output port (PX) for which no protocol subscriber (101) is connected by default, wherein the processor unit (400) is designed to check whether the telegram received via the input/output port (PX) has a telegram identifier that comprises a first identifier or a first identifier and a second identifier,
wherein the processor unit (400) is designed to identify the telegram as a protocol telegram on the basis of the telegram identifier, comprising the first identifier or the first identifier and the second identifier, and to reject the telegram if the check is positive, and
wherein the checking and rejection of the telegram is subject to a precondition that needs to be taken into consideration by the processor unit (400),
the meeting of the precondition leading to an exception to rejection of the telegram.

2. Network distributor (115) according to Claim 1, wherein the processor unit (400) is designed to use a port identifier in the storage unit (405) to check whether the network subscriber (300) that is connected via the input/output port (PX) of the network distributor (115) and that has sent the telegram is in the form of a protocol subscriber (101), and
wherein a port identifier is stored in the storage unit (405) if the network subscriber (300) connected via the input/output port (PX) is in the form of a protocol subscriber (101).

3. Network distributor (115) according to Claim 1, wherein a telegram in the form of a protocol telegram is in the form of an Ethernet telegram,
wherein the Ethernet telegram has an Ethernet header portion (505) and an Ethernet data portion (510), wherein the telegram identifier comprises the first identifier,
wherein the Ethernet header portion (505) comprises the first identifier of the telegram identifier, and wherein the processor unit (400) is designed to evaluate the first identifier of the telegram identifier in the Ethernet header portion (505).

4. Network distributor (115) according to Claim 1, wherein a telegram in the form of a protocol telegram is in the form of an Ethernet telegram,
wherein the Ethernet telegram has an Ethernet header portion (505) and an Ethernet data portion (510), wherein the Ethernet data portion (510) has a fieldbus protocol header portion (525),
wherein the telegram identifier comprises the first identifier and the second identifier,
wherein the Ethernet header portion (505) comprises the first identifier of the telegram identifier and the fieldbus protocol header portion (525) comprises the second identifier of the telegram identifier, and wherein the processor unit (400) is designed to evaluate the first identifier of the telegram identifier in the Ethernet header portion (505) and the second identifier of the telegram identifier in the fieldbus protocol header portion (525).

5. Network distributor (115) according to one of Claims 1 to 4,
wherein the precondition to which checking and rejection of a telegram is subject comprises determination of whether the address of the telegram corresponds to a predefined address.

6. Automation network (100) that has multiple network subscribers (300) connected to one another via a data line network (200),
wherein network subscribers (300) are designed as protocol subscribers (101) for processing telegrams that are in the form of protocol telegrams,
wherein the automation network (100) has at least one network distributor (115) comprising multiple input/output ports (PX), a processor unit (400) and a storage unit (405),
wherein the multiple input/output ports (PX) are each designed to connect network subscribers (300) via the data line network (200),
wherein the processor unit (400) is designed to receive a telegram via an input/output port (PX) and to output said telegram via a further input/output port (PX), which is stored in a routing table in the storage unit (405),
**characterized in that** the processor unit (400) is furthermore designed to check a telegram for whether the telegram is a protocol telegram and has been received via an input/output port (PX) for which no protocol subscriber (101) is connected by default, and to reject the telegram if the check is positive, wherein the checking and rejection of the telegram is subject to a precondition that needs to be taken into consideration by the processor unit (400),
the meeting of the precondition leading to an exception to rejection of the telegram, and
wherein the automation network (100) is designed as a master/slave system,
wherein a protocol subscriber (101) is in the form of the master subscriber (105), which is designed to output telegrams that are in the form of protocol telegrams via the data line network (200),
wherein the master subscriber (105) is further designed to make adjustments in the processor unit (400) of the network distributor (115) to the effect that no protocol subscriber (101) is connected to an input/output port (PX) of the network distributor (115) .

7. Automation network (100) according to Claim 6, wherein the processor unit (400) is designed to use a port identifier in the storage unit (405) to check whether the network subscriber (300) that is connected via the input/output port (PX) of the network distributor (115) and that has sent the telegram is in the form of a protocol subscriber (101), and
wherein a port identifier is stored in the storage unit (405) if the network subscriber (300) connected via the input/output port (PX) is in the form of a protocol subscriber (101) .

8. Automation network (100) according to Claim 6 or 7,
wherein the processor unit (400) is designed to check whether the telegram received via the input/output port (PX) has a telegram identifier, and wherein the processor unit (400) is designed to identify the telegram as a protocol telegram on the basis of the telegram identifier.

9. Automation network (100) according to Claim 6, wherein the master subscriber (105) is designed to predefine a network structure of the network subscribers (300) and to convey the predefined network structure to the processor unit (400) of the network distributor (115) via the data line network (200), and wherein the processor unit (400) is designed to label the input/output ports (PX) of the network distributor (115) that have protocol subscribers (101) connected to them via the data line network (200) with the port identifier in the storage unit (405) on the basis of the predefined network structure.

10. Automation network (100) according to Claim 6, wherein the master subscriber (105) is designed to detect a network structure of the network subscribers (300) by means of query telegrams,
wherein, if a network subscriber (300) that is in the form of a protocol subscriber (101) receives a query telegram, the protocol subscriber (101) is designed to enter protocol subscriber information into the query telegram and to return the query telegram to the master subscriber (105) unless a subsequent protocol subscriber (101) is connected via the data line network (200),
wherein, if the network distributor (115) receives a query telegram via the input/output port (PX), the network distributor (115) is designed to enter port information into the query telegram and to return the query telegram to the master subscriber (105),
wherein the master subscriber (105) is designed to take the port information as a basis for outputting further query telegrams to the network distributor (115), which the processor unit (400) of the network distributor (115) forwards via the further input/output port (PX), which is stored for the respective query telegram in the routing table in the storage unit (405), to the network subscriber (300) connected via the data line network (200),
wherein the master subscriber (105) is designed to take the protocol subscriber information in the received further query telegrams as a basis for conveying to the processor unit (400) of the network distributor (115) which of the multiple input/output ports (PX) of the network distributor (115) have protocol subscribers (101) connected to them via the data line network (200), and
wherein the processor unit (400) is designed to label the input/output ports (PX) of the network distributor (115) that have a protocol subscriber (101) connected to them via the data line network (200) with the port identifier in the storage unit (405).

11. Method for data transmission in an automation network (100) having multiple network subscribers (300) and at least one network distributor (115) that are connected to one another via a data line network (200), wherein the network subscribers (300) comprise protocol subscribers (101) designed to process telegrams that are in the form of protocol telegrams,
wherein the network distributor (115) has multiple input/output ports (PX), a processor unit (400) and a storage unit (405),
wherein the multiple input/output ports (PX) are each designed to connect network subscribers (300) via the data line network (200),
wherein the processor unit (400) receives a telegram via an input/output port (PX) and outputs said telegram via a further input/output port (PX), which is stored in a routing table in the storage unit (405), **characterized in that** the processor unit (400) then checks a telegram for whether the telegram is a protocol telegram and has been received via an input/output port (PX) for which no protocol subscriber (101) is connected by default,
wherein the processor unit (400) accomplishes this by checking whether the telegram has a telegram identifier, comprising a first identifier or a first identifier and a second identifier, that labels the telegram as a protocol telegram, and rejects the telegram if the check is positive, and
wherein the checking and rejection of the telegram is subject to a precondition that needs to be taken into consideration by the processor unit (400),
the meeting of the precondition leading to an exception to rejection of the telegram.

12. Method according to Claim 11,
wherein the processor unit (400) checks whether a port identifier for a protocol subscriber (101) connected via the input/output port (PX) of the network distributor (115) is stored in the storage unit (405).

13. Method according to Claim 11,
wherein a telegram in the form of a protocol telegram is in the form of an Ethernet telegram,
wherein the Ethernet telegram has an Ethernet header portion (505) and an Ethernet data portion (510), wherein the telegram identifier comprises the first identifier,
wherein the Ethernet header portion (505) comprises the first identifier of the telegram identifier, and wherein the processor unit (400) is designed to evaluate the first identifier of the telegram identifier in the Ethernet header portion (505).

14. Method according to Claim 11,
wherein a telegram in the form of a protocol telegram is in the form of an Ethernet telegram,
wherein the Ethernet telegram has an Ethernet header portion (505) and an Ethernet data portion (510), wherein the Ethernet data portion (510) has a fieldbus protocol header portion (525),
wherein the telegram identifier comprises the first identifier and the second identifier,
wherein the Ethernet header portion (505) comprises the first identifier of the telegram identifier and the fieldbus protocol header portion (525) comprises the second identifier of the telegram identifier, and wherein the processor unit (400) is designed to evaluate the first identifier of the telegram identifier in the Ethernet header portion (505) and the second identifier of the telegram identifier in the fieldbus protocol header portion (525).

15. Method according to one of Claims 11 to 14, wherein the precondition to which checking and rejection of a telegram is subject comprises determination of whether the address of the telegram corresponds to a predefined address.

## Revendications

1. Répartiteur de réseau (115) qui comporte une pluralité de ports d'entrée/sortie (PX), une unité formant processeur (400) et une unité formant mémoire (405),
la pluralité de ports d'entrée/sortie (PX) étant conçue pour raccorder des périphériques de réseau (300) par le biais d'un réseau de lignes de données (200), les périphériques de réseau (300) comprenant des périphériques de protocole (101) qui sont conçus pour traiter des télégrammes qui sont conçus comme des télégrammes de protocole,
l'unité formant processeur (400) étant conçue pour recevoir des télégrammes par le biais d'un port d'entrée/sortie (PX) et les délivrer en sortie par le biais d'un autre port d'entrée/sortie (PX) qui est stocké dans une table de routage de l'unité formant mémoire (405),
**caractérisé en ce que** l'unité formant processeur (400) est également conçue pour vérifier un télégramme pour déterminer si le télégramme est un télégramme de protocole et a été reçu par le biais d'un port d'entrée/sortie (PX) pour lequel un préréglage a été effectué suivant lequel aucun périphérique de protocole (101) n'est raccordé,
l'unité formant processeur (400) étant conçue pour vérifier si le télégramme reçu par le biais du port d'entrée/sortie (PX) comporte un indicatif de télégramme qui comprend un premier indicatif ou un premier indicatif et un deuxième indicatif,
l'unité formant processeur (400) étant conçue identifier le télégramme comme télégramme de protocole sur la base de l'indicatif de télégramme, comprenant le premier indicatif ou le premier indicatif et le deuxième indicatif, et rejeter le télégramme si la vérification est positive, et
la vérification et le rejet du télégramme étant soumis à une condition préalable que doit prendre en compte l'unité formant processeur (400),
la satisfaction à la condition préalable conduisant à une exception au rejet du télégramme.

2. Répartiteur de réseau (115) selon la revendication 1,
l'unité formant processeur (400) étant conçue pour vérifier à l'aide d'un indicatif de port de l'unité formant mémoire (405) si le périphérique de réseau (300) raccordé par le biais du port d'entrée/sortie (PX) du répartiteur de réseau (115) qui a envoyé le télégramme, est conçu comme un périphérique de protocole (101), et un indicatif de port étant stocké dans l'unité formant mémoire (405) si le périphérique de réseau (300) raccordé par le biais du port d'entrée/sortie (PX) est conçu comme un périphérique de protocole (101).

3. Répartiteur de réseau (115) selon la revendication 1,
un télégramme conçu comme un télégramme de protocole étant conçu comme un télégramme Ethernet,
le télégramme Ethernet comportant une partie d'en-tête Ethernet (505) et une partie de données Ethernet (510), l'indicatif de télégramme comprenant le premier indicatif,
la partie d'en-tête Ethernet (505) comprenant le premier indicatif de l'indicatif de télégramme, et
l'unité formant processeur (400) étant conçue pour évaluer le premier indicatif de l'indicatif de télégramme dans la partie d'en-tête Ethernet (505).

4. Répartiteur de réseau (115) selon la revendication 1,
un télégramme conçu comme un télégramme de protocole étant conçu comme un télégramme Ethernet,
le télégramme Ethernet comportant une partie d'en-tête Ethernet (505) et une partie de données Ethernet (510), la partie de données Ethernet (510) comportant une partie d'en-tête de protocole de bus de terrain (525), l'indicatif de télégramme comprenant le premier indicatif et le deuxième indicatif,
la partie d'en-tête Ethernet (505) comprenant le premier indicatif de l'indicatif de télégramme et la partie d'entête de protocole de bus de terrain (525) comprenant le deuxième indicatif de l'indicatif de télégramme, et l'unité formant processeur (400) étant conçue pour évaluer le premier indicatif de l'indicatif de télégramme dans la partie d'en-tête Ethernet (505) et le deuxième indicatif de l'indicatif de télégramme dans la partie d'en-tête de protocole de bus de terrain (525).

5. Répartiteur de réseau (115) selon l'une des revendications 1 à 4,
la condition préalable de vérifier et rejeter un télégramme comprenant l'opération visant à déterminer si l'adresse du télégramme correspond à une adresse spécifiée.

6. Réseau d'automatisation (100) qui comporte un certain nombre de périphériques de réseau (300) qui sont reliés les uns aux autres par le biais d'un réseau de lignes de données (200),
les périphériques de réseau (300) étant conçus comme des périphériques de protocole (101) destinés au traitement de télégrammes qui sont conçus comme des télégrammes de protocole,
le réseau d'automatisation (100) comportant au moins un répartiteur de réseau (115) qui comprend une pluralité de ports d'entrée/sortie (PX), une unité formant processeur (400) et une unité formant mémoire (405),
la pluralité de ports d'entrée/sortie (PX) étant conçus pour raccorder des périphériques de réseau (300) par le biais du réseau de lignes de données (200),
l'unité formant processeur (400) étant conçue pour recevoir un télégramme par le biais d'un port d'entrée/sortie (PX) et pour le délivrer en sortie par le biais d'un autre port d'entrée/sortie (PX) qui est stocké dans une table de routage de l'unité formant mémoire (405),
**caractérisé en ce que** l'unité formant processeur (400) est également conçue pour vérifier un télégramme pour déterminer si le télégramme est un télégramme de protocole et a été reçu par le biais d'un port d'entrée/sortie (PX) pour lequel un préréglage a été effectué suivant lequel aucun périphérique de protocole (101) n'est raccordé, et pour rejeter le télégramme si la vérification est positive,
la vérification et le rejet du télégramme étant soumis à une condition préalable que doit prendre en compte l'unité formant processeur (400),
la satisfaction à la condition préalable conduisant à une exception au rejet du télégramme, et
le réseau d'automatisation (100) étant conçu comme un système maître-esclave,
un périphérique de protocole (101) étant conçu comme périphérique maître (105) qui est conçu pour délivrer en sortie des télégrammes qui sont conçus comme des télégrammes de protocole, par le biais du réseau de lignes de données (200),
le périphérique maître (105) étant en outre conçu pour effectuer dans l'unité formant processeur (400) du répartiteur de réseau (115) un réglage suivant lequel aucun périphérique de protocole (101) n'est raccordé à un port d'entrée/sortie (PX) du répartiteur de réseau (115) .

7. Réseau d'automatisation (100) selon la revendication 6,
l'unité formant processeur (400) étant conçue pour vérifier à l'aide d'un indicatif de port dans l'unité formant mémoire (405) si le périphérique de réseau (300), raccordé par le biais du port d'entrée/sortie (PX) du répartiteur de réseau (115) qui a envoyé le télégramme, est conçu comme un périphérique au protocole (101), et un indicatif de port étant stocké dans l'unité formant mémoire (405) lorsque le périphérique de réseau (300) raccordé par le biais du port d'entrée/sortie (PX) est conçu comme un périphérique de protocole (101).

8. Réseau d'automatisation (100) selon la revendication 6 ou 7,
l'unité formant processeur (400) étant conçue pour vérifier si le télégramme reçu par le biais du port d'entrée/sortie (PX) comporte un indicatif de télégramme, et
l'unité formant processeur (400) étant conçue pour identifier le télégramme comme télégramme de protocole sur la base de l'indicatif de télégramme.

9. Réseau d'automatisation (100) selon la revendication 6,
le périphérique maître (105) étant conçu pour spécifier une structure de réseau des périphériques de réseau (300) et pour transmettre la structure de réseau spécifiée à l'unité formant processeur (400) du répartiteur de réseau (115) par le biais du réseau de lignes de données (200), et
l'unité formant processeur (400) étant conçue pour identifier avec l'indicatif de port de l'unité formant mémoire (405), sur la base de la structure de réseau spécifiée, les ports d'entrée/sortie (PX) du répartiteur de réseau (115), auxquels les périphériques de protocole (101) sont raccordés par le biais du réseau de lignes de données (200).

10. Réseau d'automatisation (100) selon la revendication 6,
le périphérique maître (105) étant conçu pour détecter une structure de réseau des périphériques de réseau (300) au moyen de télégrammes de requête,
lorsqu'un périphérique de réseau (300), qui est conçu comme un périphérique de protocole (101), reçoit un télégramme de requête, le périphérique de protocole (101) étant conçu pour entrer une information de périphérique de protocole dans le télégramme de requête et pour renvoyer le télégramme de requête au périphérique maître (105), à condition qu'aucun périphérique de protocole (101) suivant ne soit raccordé par le biais du réseau de lignes de données (200),
lorsque le répartiteur de réseau (115) reçoit un télégramme de requête par le biais du port d'entrée/sortie (PX), le répartiteur de réseau (115) étant conçu pour entrer une information de port dans le télégramme de requête et renvoyer le télégramme de requête au périphérique maître (105),
le périphérique maître (105) étant conçu pour délivrer en sortie au répartiteur de réseau (115), sur la base de l'information de port, d'autres télégrammes de requête que l'unité formant processeur (400) du répartiteur de réseau (115) transmet, par le biais de l'autre port d'entrée/sortie (PX) qui est stocké dans le télégramme de requête respectif de la table de routage de l'unité formant mémoire (405), au périphérique de réseau (300) raccordé par le biais du réseau de lignes de données (200),
le périphérique maître (105) étant conçu pour transmettre, sur la base de l'information de périphérique de protocole des autres télégrammes de requête reçus, à l'unité formant processeur (400) du répartiteur de réseau (115) lesquels de la pluralité de ports d'entrée/sortie (PX) du répartiteur de réseau (115) des périphériques de protocole (101) sont raccordés par le biais du réseau de lignes de données (200), et
l'unité formant processeur (400) étant conçue pour identifier avec l'indicatif de port dans l'unité formant mémoire (405) les ports d'entrée/sortie (PX) du répartiteur de réseau (115) auxquels un périphérique de protocole (101) est raccordé par le biais du réseau de lignes de données (200).

11. Procédé de transmission de données dans un réseau d'automatisation (100) qui comporte une pluralité de périphériques de réseau (300) et au moins un répartiteur de réseau (115) qui sont reliés entre eux par le biais d'un réseau de lignes de données (200),
les périphériques de réseau (300) comprenant des périphériques de protocole (101) qui sont conçus pour traiter des télégrammes qui sont conçus comme des télégrammes de protocole,
le répartiteur de réseau (115) comportant une pluralité de ports d'entrée/sortie (PX), une unité formant processeur (400) et une unité formant mémoire (405),
la pluralité de ports d'entrée/sortie (PX) étant conçus pour raccorder des périphériques de réseau (300) par le biais du réseau de lignes de données (200),
l'unité formant processeur (400) recevant un télégramme par le biais d'un port d'entrée/sortie (PX) et le délivrant en sortie par le biais d'un autre port d'entrée/sortie (PX) qui est stocké dans une table de routage de l'unité formant mémoire (405),
**caractérisé en ce que** l'unité formant processeur (400) vérifie un télégramme pour déterminer si le télégramme est un télégramme de protocole et a été reçu par le biais d'un port d'entrée/sortie (PX) pour lequel un préréglage a été effectué suivant lequel aucun périphérique de protocole (101) n'est raccordé,
l'unité formant processeur (400) vérifiant pour cela si le télégramme comporte un indicatif de télégramme comprenant un premier indicatif ou un premier indicatif et un deuxième indicatif, qui identifie le télégramme comme télégramme de protocole, et rejetant le télégramme si la vérification est positive, et
la vérification et le rejet du télégramme étant soumis à une condition préalable que doit prendre en compte l'unité formant processeur (400),
la satisfaction à la condition préalable conduisant à une exception au rejet du télégramme.

12. Procédé selon la revendication 11,
l'unité formant processeur (400) vérifiant si un indicatif de port relatif à un périphérique au protocole (101) raccordé par le biais du port d'entrée/sortie (PX) du répartiteur de réseau (115) est stocké dans l'unité formant mémoire (405).

13. Procédé selon la revendication 11,
un télégramme conçu comme un télégramme de protocole étant conçu comme un télégramme Ethernet,
le télégramme Ethernet comportant une partie d'en-tête Ethernet (505) et une partie de données Ethernet (510), l'indicatif de télégramme comprenant le premier indicatif,
la partie d'en-tête Ethernet (505) comprenant le premier indicatif de l'indicatif de télégramme, et
l'unité formant processeur (400) étant conçue pour évaluer le premier indicatif de l'indicatif de télégramme dans la partie d'en-tête Ethernet (505).

14. Procédé selon la revendication 11,
un télégramme conçu comme un télégramme de protocole étant conçu comme un télégramme Ethernet,
le télégramme Ethernet comportant une partie d'en-tête Ethernet (505) et une partie de données Ethernet (510), la partie de données Ethernet (510) comportant une partie d'en-tête de protocole de bus de terrain (525), l'indicatif de télégramme comprenant le premier indicatif et le deuxième indicatif,
la partie d'en-tête Ethernet (505) comprenant le premier indicatif de l'indicatif de télégramme et la partie d'entête de protocole de bus de terrain (525) comprenant le deuxième indicatif de l'indicatif de télégramme, et l'unité formant processeur (400) étant conçue pour évaluer le premier indicatif de l'indicatif de télégramme dans la partie d'en-tête Ethernet (505) et le deuxième indicatif de l'indicatif de télégramme dans la partie entête de protocole de bus de terrain (525).

15. Procédé selon l'une des revendications 11 à 14,
la condition préalable de vérification et de rejet d'un télégramme comprenant l'opération visant à déterminer si l'adresse du télégramme correspond à une adresse spécifiée.
